(19) Europäisches Patentamt

European Patent Office

Office européen des brevets

(11) **EP 1 091 178 B1**

(12) **EUROPEAN PATENT SPECIFICATION**

(45) Date of publication and mention
of the grant of the patent:
**08.11.2006 Bulletin 2006/45**

(51) Int Cl.:
*F24F 11/00* (2006.01)    *F24F 3/06* (2006.01)

(21) Application number: **00116247.8**

(22) Date of filing: **08.08.2000**

(54) **Multiroom air conditioner and control method therefor**

Klimaanlage für mehrere Räume und Steuerverfahren hierfür

Conditionnement d'air pour plusieurs locaux et méthode pour sa commande

(84) Designated Contracting States:
ES GR IT

(30) Priority: **06.10.1999 JP 28558699**

(43) Date of publication of application:
**11.04.2001 Bulletin 2001/15**

(73) Proprietor: **MATSUSHITA ELECTRIC INDUSTRIAL CO., LTD.**
**Kadoma-shi, Osaka 571-8501 (JP)**

(72) Inventors:
• **Nishihara, Yoshikazu**
  **Kouga-gun,**
  **Shiga, 529-1851 (JP)**
• **Asada, Noriya**
  **Yamashina-ku,**
  **Kyoto-shi,**
  **Kyoto, 607-8168 (JP)**
• **Ishikawa, Norimasa**
  **Kusatsu-shi,**
  **Shiga, 525-0057 (JP)**
• **Takahara, Tsutomu**
  **Moriyama-shi,**
  **Shiga, 524-0022 (JP)**
• **Ao, Takahiko**
  **Otsu-shi,**
  **Shiga, 520-2141 (JP)**

(74) Representative: **Kügele, Bernhard et al**
**Novagraaf SA**
**25, Avenue du Pailly**
**1220 Les Avanchets - Geneva (CH)**

(56) References cited:
• **PATENT ABSTRACTS OF JAPAN vol. 1996, no. 11, 29 November 1996 (1996-11-29) -& JP 08 189690 A (MATSUSHITA ELECTRIC IND CO LTD), 23 July 1996 (1996-07-23)**
• **PATENT ABSTRACTS OF JAPAN vol. 1999, no. 12, 29 October 1999 (1999-10-29) -& JP 11 182912 A (TOSHIBA CORP), 6 July 1999 (1999-07-06)**
• **PATENT ABSTRACTS OF JAPAN vol. 1999, no. 12, 29 October 1999 (1999-10-29) -& JP 11 173628 A (MITSUBISHI HEAVY IND LTD), 2 July 1999 (1999-07-02)**
• **PATENT ABSTRACTS OF JAPAN vol. 1999, no. 14, 22 December 1999 (1999-12-22) -& JP 11 248229 A (MATSUSHITA ELECTRIC IND CO LTD), 14 September 1999 (1999-09-14)**
• **PATENT ABSTRACTS OF JAPAN vol. 1996, no. 04, 30 April 1996 (1996-04-30) -& JP 07 324841 A (MATSUSHITA SEIKO CO LTD), 12 December 1995 (1995-12-12)**
• **PATENT ABSTRACTS OF JAPAN vol. 1998, no. 04, 31 March 1998 (1998-03-31) -& JP 09 310927 A (MATSUSHITA SEIKO CO LTD), 2 December 1997 (1997-12-02)**

**Description**

**TECHNICAL FIELD OF THE INVENTION**

The present invention relates to a multi-room air conditioner comprising an outdoor unit and plural indoor units connected to the outdoor unit, and its control method.

**BACKGROUND OF THE INVENTION**

A multi-room air conditioner comprises one outdoor unit, and plural indoor units connected to the outdoor unit. Each one of the plural indoor units is installed in each room. Such multi-room air conditioner is a kind of separate type air conditioner.

Conventionally, in dehumidifying operation of such multi-room air conditioner, the indoor air flow rate is set at the minimum air flow rate. Further, in order to prevent the cold wind from directly hitting the body of the inhabitants, and in order that the inhabitants may not feel the cold wind, the wind direction is set in the horizontal direction. Accordingly, the frequency of the compressor incorporated in the outdoor unit is set at a frequency slightly higher than the minimum, and dehumidifying operation is carried out.

In such conventional multi-room air conditioner, since the cold wind is blow in the horizontal direction, the cold air does hit the inhabitants in the room, but the cold wind sent out upward in the room soon descends. As a result, it is still a problem that the inhabitants feel the cold wind.

Besides, since a plurality of indoor units are connected to the outdoor unit, the heat exchanger having a large evaporator capacity is required. Hence, the temperature of the heat exchanger becomes higher and the dehumidifying capacity is lowered and the indoor humidity is hardly removed.

On the other hand, in the multi-room air conditioner, as a dehumidifying method without lowering the indoor temperature, a reheating type dehumidifying control using the indoor unit having the condenser and evaporator has been proposed (for example, see Japanese Laid-open Patent No. 7-324841).

JP-A-08189690 discloses a multi-room air conditioner in which the compressor capacity is controlled during dehumidifying operations on the basis of differential temperature calculator of sensed room temperature.

In the multi-room air conditioner having such reheating type dehumidifying control, blowing operation is necessary in order to release heat in the condenser and absorb heat in the evaporator. Therefore, when the diffused air is at same temperature as the suction temperature, if the room temperature is low, cold wind may be felt. Yet, by blowing operation, the noise is raised, and the refrigerant from the condenser is reduced in pressure at the indoor unit side, and the refrigerant noise is likely to be released. In particular, when the number of operating units out of the plural indoor units is changed, or when the refrigerant circulation amount in the indoor load state is changed, a large refrigerant noise is generated. Or, while one of the plural indoor units is in reheating dehumidifying operation, the other indoor units cannot operate in cooling mode. The indoor units cannot be individually controlled in temperature.

Such indoor unit having the condenser and evaporator requires a pressure reducing device installed between the condenser and evaporator, and a two-way valve as bypass means of the pressure reducing device. As a result, the structure is complicated and the manufacturing cost is higher.

It is an object of the invention to present a multi-room air conditioner enhanced in the dehumidifying performance, suppressed in the air stream feel and cold wind feel, excellent in energy-saving performance and silent operation, superior in individual temperature controllability of individual indoor units, and excellent in cost performance. The invention relates to a multi-room air conditioner having plural indoor units connected to an outdoor unit capable of dehumidifying with a windless feel suppressed in air stream feel and cold wind feel.

**SUMMARY OF THE INVENTION**

A control method of multi-room air conditioner of the invention comprises:

(a) a step of supplying the multi-room air conditioner,
in which the multi-room air conditioner includes one outdoor unit (2) and a plurality of indoor units (4a, 4b, 4c) connected to the outdoor unit,
(b) a step of storing a set room temperature,
(c) a step of detecting a room temperature, room humidity, and piping temperature in each one of running units out of the plurality of indoor units,
(d) a step of storing each piping control temperature on the basis of the detected room temperature and room humidity,
(e) a step of setting the highest piping control temperature of the individual piping control temperatures as a control piping temperature, and

(f) a step of comparing the control piping temperature and the piping temperature of the indoor unit adopted as the control piping temperature, and controlling the capacity of a variable capacity compressor (6) installed in the outdoor unit.

A multi-room air conditioner of the invention comprises:

(a) one outdoor unit (2) including a variable capacity compressor (6), an outdoor heat exchanger (8), a refrigerant liquid side main pipe (14), a refrigerant gas side main pipe (18), and a motor-driven expansion valve (7), in which a refrigerant liquid flows in the refrigerant liquid side main pipe, and a refrigerant gas flows in the refrigerant gas side main pipe,
(b) a plurality of indoor units (4a, 4b, 4c),
in which each one of the plurality of indoor units having a indoor heat exchanger (12a, 12b, 12c), and
(c) refrigerant liquid side branch pipes (16a, 16b, 16c) branched off from the refrigerant liquid side main pipe and refrigerant gas side branch pipes (20a, 20b, 20c) branched off from the refrigerant gas side main pipe, and motor-driven refrigerant distribution expansion valves (22a, 22b, 22c) installed in the refrigerant liquid side branch pipes, installed between the outdoor unit and the plurality of indoor units.

Each one of the indoor units (4a, 4b, 4c) comprises:

room temperature setting memory means (52) for storing a set room temperature,
room temperature detecting means (36a, 36b, 36c) for detecting a room temperature,
room humidity detecting means (37a, 37b, 37c) for detecting a room humidity,
piping temperature detecting means (39a, 39b, 39c) for detecting a piping temperature of the indoor heat exchanger,
differential temperature calculating means (50) for calculating the differential temperature of the set room temperature and the room temperature on the basis of the room temperature setting memory means and room temperature detecting means,
rated capacity memory means (56) for storing the rated capacity of the each indoor unit,
model type memory means (57) for storing a model type of the each indoor unit,
run/stop memory means (54) for storing whether the each indoor unit is in running state or stopped state,
target piping temperature setting means (55) for setting and storing the target piping temperature on the basis of the room temperature detected by the room temperature detecting means and the humidity detected by the room humidity detecting means.

The outdoor unit comprises :

expansion valve opening degree operating means (64) for controlling the opening degree of the motor-driven expansion valve,
compressor frequency operating means (62) for controlling the capacity of the variable capacity compressor, and control piping temperature setting means (84) for setting the highest target piping temperature of the target piping temperatures of the indoor units as the control piping temperature.

The compressor frequency operating means compares the control piping temperature, and the piping temperature of the indoor unit adopted as the control piping temperature, and controls the capacity of the variable capacity compressor of the outdoor unit.

In this constitution, the dehumidifying performance is enhanced. Air stream feel and cold wind feel of the inhabitants are suppressed. The energy-saving performance and silent operation are excellent. The individual temperature controllability of each indoor unit is superior. The cost performance is excellent. A windless dehumidifying operation suppressed in air stream feel and cold wind feel is realized.

**BRIEF DESCRIPTION OF THE DRAWINGS.**

Fig. 1 shows a refrigeration cycle piping system and a sensor configuration of a multi-room air conditioner in embodiment 1 of the invention.
Fig. 2 shows a refrigeration cycle piping system and a sensor configuration of a multi-room air conditioner in embodiment 2 of the invention.
Fig. 3 is a schematic longitudinal sectional view of an indoor unit used in a multi-room air conditioner in an embodiment of the invention.

Fig. 4 is a block diagram showing flow of control in the multi-room air conditioner in embodiment 1 of the invention.

Fig. 5 is a block diagram showing flow of control in the multi-room air conditioner in embodiment 2 of the invention.

Fig. 6 is a temperature zone division diagram of temperature difference $\Delta T$ of room temperature and set temperature.

Fig. 7 is a diagram showing the relation between the sum of indoor unit load constants and compressor frequency in a multi-room air conditioner in an embodiment of the invention.

Fig. 8 is a region diagram of cooling, dry region 1, and dry region 2 in a multi-room air conditioner in an embodiment of the invention.

Fig. 9 is a flowchart showing dehumidifying operation control.

Fig. 10 is a schematic diagram showing wind direction blade operation in cooling region in dehumidifying operation.

Fig. 11 is a schematic diagram showing wind direction blade operation in dry region 1 and dry region 2 in dehumidifying operation.

Fig. 12 shows wind direction and air flow rate in a wall-mount type indoor unit, and operation diagram of indoor heat exchanger temperature (EVA temperature).

Fig. 13 is a flowchart showing control when windless condition is established in dry region.

Fig. 14 is a flowchart showing control of setting the control piping temperature in the multi-room air conditioner in embodiment 1 of the invention.

Fig. 15 is a flowchart showing control of setting the control piping temperature in the multi-room air conditioner in embodiment 2 of the invention.

Fig. 16 is a flowchart showing control of the compressor frequency when the windless condition is established.

Fig. 17 shows wind direction, air flow rate, compressor frequency by target piping temperature, and time chart when using the expansion valve opening degree control method in a multi-room air conditioner in an embodiment of the invention.

Fig. 18 (a) shows flow of cold air in dehumidifying operation in operation in dry region 1, Fig. 18 (b) shows flow of cold air in dehumidifying operation in on/off operation of indoor fan in dry region 2, and Fig. 18 (c) shows flow of cold air in dehumidifying operation in windless dry operation in dry region 2.

Fig. 19 (a) shows room temperature distribution in dehumidifying operation in operation in dry region 1, Fig. 19 (b) shows room temperature distribution in dehumidifying operation in on/off operation of indoor fan in dry region 2, and Fig. 19 (c) shows room temperature distribution in dehumidifying operation in windless dry operation in dry region 2.

Fig. 20 is a flowchart showing control of the motor-driven expansion valve when the windless condition is established.

Fig. 21 (a) is a block diagram of issuing a control instruction to outdoor unit by transmission of target piping temperature from indoor unit, showing the set state of control piping temperature by transmitting all room target piping temperatures in all-room operation, and Fig. 21 (b) shows a stopped state of indoor unit selected at the control piping temperature from the state in Fig. 21 (a).

Fig. 22 (a) is a block diagram of issuing a control instruction to outdoor unit by transmission of target piping temperature from indoor unit, showing the set state of control piping temperature by transmitting all room target piping temperatures in all-room operation, and Fig. 22 (b) shows a cooling operation state of indoor unit selected at the control piping temperature from the state in Fig. 22 (a).

Fig. 23 (a) is a block diagram of issuing a control instruction to outdoor unit by transmission of target piping temperature from indoor unit, showing the set state of control piping temperature by transmitting all room target piping temperatures in all-room operation, and Fig. 23 (b) shows a state of cooling operation and low load constant operation of an indoor unit not selected at the control piping temperature from the state in Fig. 23 (a).

Fig. 24 (a) is a block diagram of issuing a control instruction to outdoor unit by transmission of target piping temperature from indoor unit, showing the set state of control piping temperature by transmitting all room target piping temperatures in all-room operation, and Fig. 24 (b) shows a state of cooling operation and lowest indoor fan speed operation of an indoor unit not selected at the control piping temperature from the state in Fig. 24 (a).

Fig. 25 (a) is a block diagram of issuing a control instruction to outdoor unit by transmission of target piping temperature from indoor unit, showing the set state of control piping temperature by transmitting all room target piping temperatures in all-room operation, and Fig. 25 (b) shows a stopped state from differential temperature calculation of an indoor unit not selected at the control piping temperature from the state in Fig. 25 (a).

Fig. 26 is a time chart showing indoor fan control when an indoor unit not selected at the control piping temperature is stopped in differential temperature calculation.

**Reference Numerals**

2 Outdoor unit

3 Branch unit
4a, 4b, 4c Indoor unit
6 Compressor
7 Motor-driven expansion valve
8 Outdoor heat exchanger
10 Four-way valve
12a, 12b, 12c Indoor heat exchanger
14 Refrigerant liquid side main pipe
16a, 16b, 16c Refrigerant liquid side branch pipe
18 Refrigerant gas side main pipe
20a, 20b, 20c Refrigerant gas side branch pipe
22a, 22b, 22c Refrigerant distribution expansion valve
34a, 35b, 34c Indoor blower
36a, 36b, 36c Room temperature sensor, room temperature detecting means
37a, 37b, 37c Room humidity sensor, room humidity detecting means
39a, 39b, 39c Piping temperature sensor, piping temperature detecting means
40 Ambient temperature sensor
41 Saturation temperature sensor
42 Intake temperature sensor
50 Differential temperature calculating means, differential temperature calculating circuit
52 Room temperature setting memory means, room temperature setting memory circuit
54 Run-stop memory means, run/stop memory circuit
55 Target piping temperature setting means, target piping temperature setting circuit
56 Rated capacity memory means, rated capacity memory circuit
57 Model type memory means, model type memory circuit
62 Compressor frequency operating means, compressor frequency operating circuit
64 Expansion valve opening degree operating means, expansion valve opening degree operating circuit
82 Refrigerant distribution expansion valve opening degree operating circuit
84 Control piping temperature setting means, control piping temperature setting circuit

## DETAILED DESCRIPTION OF THE INVENTION

A control method of multi-room air conditioner of the invention comprises:

(a) a step of supplying the multi-room air conditioner,
in which the multi-room air conditioner includes one outdoor unit and a plurality of indoor units connected to the outdoor unit,
(b) a step of storing a set room temperature,
(c) a step of detecting the room temperature, room humidity, and piping temperature in each one of running units out of the plurality of indoor units,
(d) a step of storing each piping control temperature on the basis of the detected room temperature and room humidity,
(e) a step of setting the highest piping control temperature of the individual piping control temperatures as the control piping temperature, and
(f) a step of comparing the control piping temperature and the piping temperature of the indoor unit adopted as the control piping temperature, and controlling the capacity of a variable capacity compressor installed in the outdoor unit.

A multi-room air conditioner of the invention comprises:

one outdoor unit including a variable capacity compressor, an outdoor heat exchanger, a refrigerant liquid side main pipe, and a refrigerant gas side main pipe,
a plurality of indoor units having heat exchangers, and
a refrigeration cycle.

The refrigeration cycle has liquid side branch pipes branched off from the refrigerant liquid side main pipe in which the refrigerant liquid flows, gas side branch pipes branched off from the refrigerant gas side main pipe in which the refrigerant gas flows, and motor-driven expansion valves installed in the liquid side branch pipes. The motor-driven expansion valves control the valve opening degree of the indoor units from the refrigerant liquid side main pipe.

Each one of the indoor units comprises room temperature setting memory means for storing the setting of room temperature, room temperature detecting means for detecting the room temperature, room humidity detecting means for detecting the room humidity, and piping temperature detecting means for detecting the temperature of the heat exchanger of the indoor unit.

It further comprises differential temperature calculating means for calculating the differential temperature of the set room temperature and the room temperature from the room temperature setting memory means and room temperature detecting means.

It moreover comprises rated capacity memory means for storing the rated capacity of each indoor unit, model type memory means for storing the model type of each indoor unit, and run/stop memory means for storing whether each indoor unit is in running state or stopped state.

Further, it comprises target piping temperature setting means for setting and storing the target piping temperature from the room temperature detected by the room temperature detecting means and the humidity detected by the room humidity detecting means of the indoor unit.

Further, it comprises control piping temperature setting means for setting the target piping temperature to be controlled by operating the target piping temperature sent from each indoor unit.

Further, it comprises expansion valve opening degree operating means for controlling the opening degree of the motor-driven expansion valve.

Further, it comprises compressor frequency operating means for controlling the capacity of the variable capacity compressor by operating the transmission signal from indoors.

In the operation for selecting the target piping temperature to be controlled, the highest target piping temperature of the target piping temperatures sent from the plural indoor units is set as the control piping temperature.

The capacity of the compressor is controlled by comparing the control piping temperature and the piping temperature detected by the piping temperature detecting means of the indoor unit selected for the control piping temperature.

Preferably, the opening degree of the motor-driven expansion valve is controlled by comparing the control piping temperature and the piping temperature detected by the piping temperature detecting means of the indoor unit selected for the control piping temperature.

Preferably, the outdoor fan speed of the outdoor blower is controlled in synchronism with the control of capacity of the compressor, by comparing the control piping temperature and the piping temperature detected by the piping temperature detecting means of the indoor unit selected for the control piping temperature.

Preferably, the model type memory means is capable of changing the target control temperature stored in each indoor unit.

Preferably, if the indoor unit selected for the control piping temperature is stopped and stored in the run/stop memory means, the target piping temperature of the indoor unit of the second highest target piping temperature is changed as the object of control.

Preferably, if at least one of the plural indoor units is in dehumidifying operation, control from the target piping temperature does not take effect if cooling operation is started in other indoor unit.

Preferably, while at least one of the plural indoor units is in dehumidifying operation, in other indoor unit, if the load constant obtained from the load constant memory means is lower than the set load constant, even when cooling operation is done in other room, the control piping temperature is set from the target piping temperature transmitted from each indoor unit, and the room temperature is controlled at a further lower temperature than the piping temperature.

Preferably, while at least one of the plural indoor units is in dehumidifying operation, in other indoor unit, if cooling operation is executed, and the fan speed of the indoor blower is the lowest speed, the highest target piping temperature of the target piping temperatures sent from the indoor units is set at the control piping temperature of the object of control, and the room temperature is controlled at a further lower temperature than the piping temperature.

Preferably, when the target piping temperatures are sent from the plural indoor units and the control piping temperature is set and controlled, the overheating degree control value of the expansion valve controlling the overheating degree of the compressor is changed depending on the changes of the ambient temperature.

Preferably, when the target piping temperatures are sent from the plural indoor units and the control piping temperature is set and controlled, the overheating degree control value of the expansion valve controlling the overheating degree of the compressor is changed depending on the changes of the compressor frequency.

Preferably, when the target piping temperatures are sent from the plural indoor units and the control piping temperature is set and controlled, if one indoor unit is stopped and stored by the differential temperature calculating means, the indoor blower of the stopped indoor unit is stopped for a specific time, and then intermittent operation continues.

Referring now to the drawings, exemplary embodiments of the invention are explained below.

Exemplary Embodiment 1

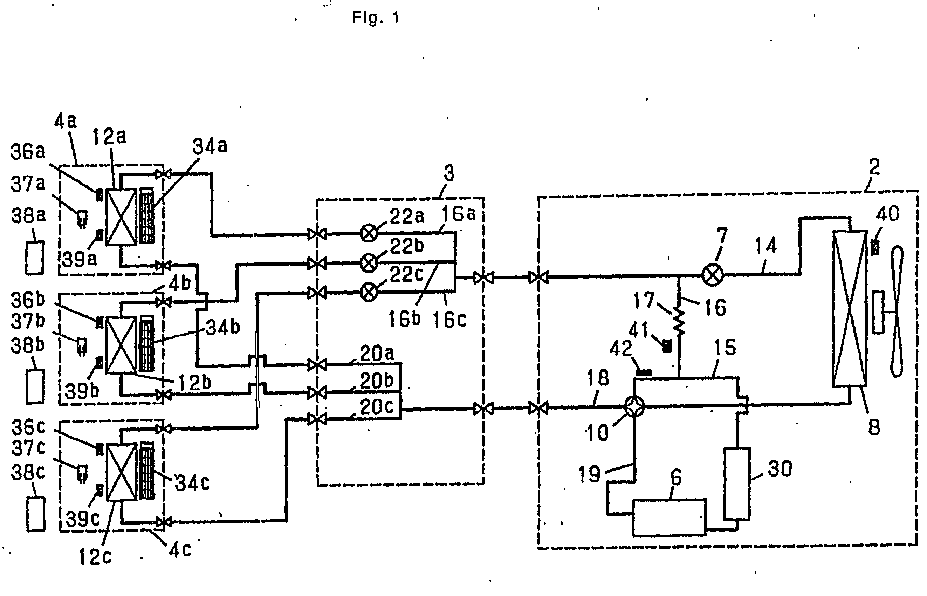

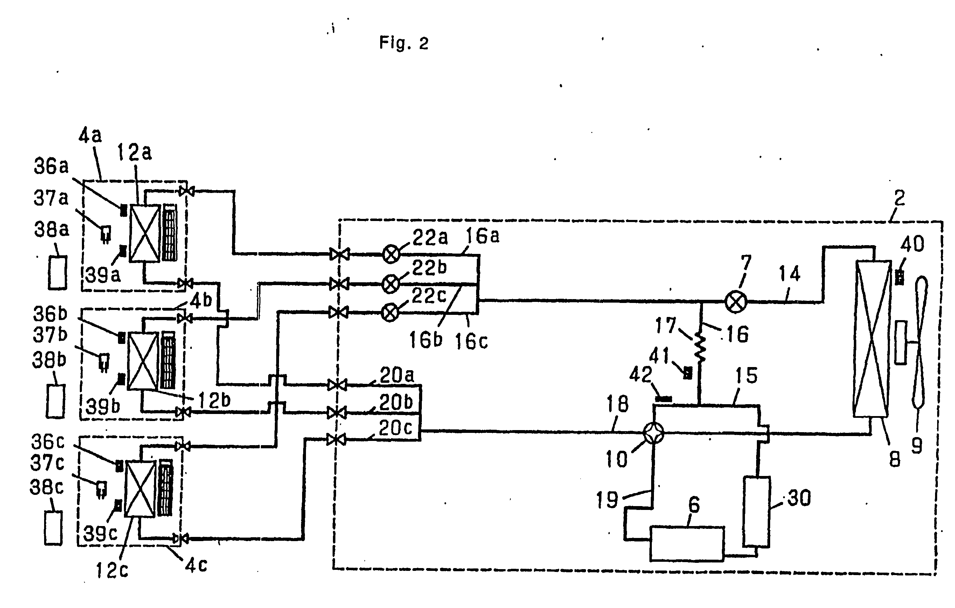

A refrigeration cycle diagram of a multi-room air conditioner in an exemplary embodiment of the invention is shown in Fig. 1. In Fig. 1, through a branch unit 3, a plurality of (for example, three) indoor units 4a, 4b, 4c are connected to one outdoor unit 2, and further connected to the branch unit 3. A refrigeration cycle diagram of a multi-room air conditioner in other exemplary embodiment of the invention is shown in Fig. 2. In Fig. 2, a plurality of (for example, three) indoor units 4a, 4b, 4c are connected to one outdoor unit 2.

In Fig. 1, the outdoor unit 2 comprises an inverter-driven variable capacity (frequency) compressor 6 (hereinafter called compressor), an outdoor heat exchanger 8, a refrigerant liquid side main pipe 14, a refrigerant gas side main pipe 18, a motor-driven expansion valve 7, a four-way valve 10 for cooling-heating changeover, a bypass duct 16, and a pressure reducing device 17. The motor-driven expansion valve 7 is installed in the refrigerant liquid side main pipe 14. The bypass duct 16 is bypass means of refrigerant from the refrigerant liquid side main pipe 14 to a suction pipe 15. The pressure reducing device 17 is installed in the bypass duct 16.

The indoor units 4a, 4b, 4c have indoor heat exchangers 12a, 12b, 12c, respectively. Between the outdoor unit 2 and indoor units 4a, 4b, 4c, the branch unit 3 is installed. The branch unit 3 includes liquid side branch pipes 16a, 16b, 16c branched off from the refrigerant liquid side main pipe 14, and gas side branch pipes 20a, 20b, 20c branched off from the refrigerant gas side main pipe 18. The outdoor unit 2 and indoor units 4a, 4b, 4c are connected by means of these liquid side branch pipes 16a, 16b, 16c and gas side branch pipes 20a, 20b, 20c. Motor-driven refrigerant distribution expansion valves 22a, 22b, 22c of which valve opening degree is pulse-controllable by a stepping motor or the like are installed in the liquid side branch pipes 16a, 16b, 16c.

The indoor units 4a, 4b, 4c are provided with room temperature sensors 36a, 36b, 36c for detecting the room temperature, room humidity sensors 37a, 37b, 37c for detecting the room humidity, piping temperature sensors 39a, 39b, 39c for detecting the piping temperature of the heat exchangers, and operation setting circuits 38a, 38b, 38c. The operation setting circuits 38a, 38b, 38c are set by the inhabitants in the desired operation mode (cooling or heating), room temperature, and run or stop mode. The room temperature sensors 36a, 36b, 36c are one kind of room temperature detecting means. The room humidity sensors 37a, 37b, 37c are one kind of room humidity detecting means. The piping temperature sensors 39a, 39b, 39c are one kind of piping temperature detecting means.

The outdoor unit 2 is provided with an ambient temperature sensor 40 for detecting the ambient temperature, a suction temperature sensor 42 for detecting the suction temperature of the compressor, and a saturation temperature sensor 41 for detecting the saturation temperature of suction pressure in the bypass duct 16 between the refrigerant liquid side main pipe and suction pipe.

In Fig. 2, the liquid side branch pipes 16a, 16b, 16c branched off from the refrigerant liquid side main pipe 14, and gas side branch pipes 20a, 20b, 20c branched off from the refrigerant gas side main pipe 18 are installed in the outdoor unit 2. The motor-driven refrigerant distribution expansion valves 22a, 22b, 22c of which valve opening degree is pulse-controllable by a stepping motor or the like are installed respectively in the liquid side branch pipes 16a, 16b, 16c.

In the refrigeration cycle having such structure, in cooling or dehumidifying operation, the refrigerant discharged from the compressor 6 flows into the outdoor heat exchanger 8 through the four-way valve 10. This refrigerant exchanges heat with fresh air in the outdoor heat exchanger 8 as the outdoor blower 9 is driven, and is condensed and liquefied. Consequently, the refrigerant passes through the motor-driven expansion valve 7, and is reduced in pressure in a first stage. The refrigerant reduced in pressure passes through the refrigerant liquid side main pipe 14, and the refrigerant is distributed in the liquid side branch pipes 16a, 16b, 16c. Then, in the refrigerant distribution expansion valves 22a, 22b , 22c, the flow rate of the refrigerant distributed into plural indoor units is controlled. The refrigerant is evaporated in the indoor units 4a, 4b, 4c. Then, the evaporated refrigerants converge at the refrigerant gas side main pipe 18 from the gas side branches. The converted refrigerant passes through the four-way valve 10, and is sucked again into the compressor 8.

The refrigerant distribution expansion valves 22a, 22b , 22c are pulse-controlled by a stepping motor or the like so that the opening degree may be suited to the load in the room. Accordingly, the refrigerant is controlled at the flow rate depending on the room load.

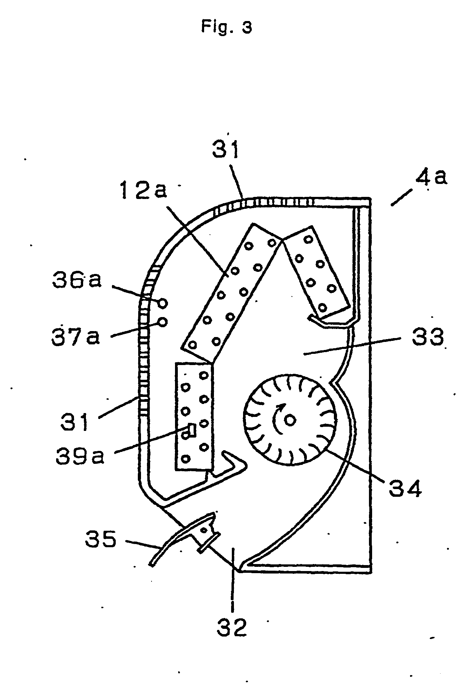

A structure of an indoor unit of a multi-room air conditioner in a different exemplary embodiment of the invention is shown in Fig. 3. In Fig. 3, plural suction ports 31 are formed in the upper part and front part of the main body of the indoor unit 4a. An air diffuser 32 is formed in the lower part of the main body. An indoor heat exchanger 12a and an indoor blower 34 are provided in an air passage 33 communicating between the suction ports 31 and air diffuser 32. A wind direction changing blade 35 is oscillatably provided in the air diffuser 32. A piping temperature sensor 39a is fitted in contact with the refrigerant piping of the indoor heat exchanger 12a disposed underneath. A room temperature sensor 36a and a room humidity sensor 37a are disposed in the main body.

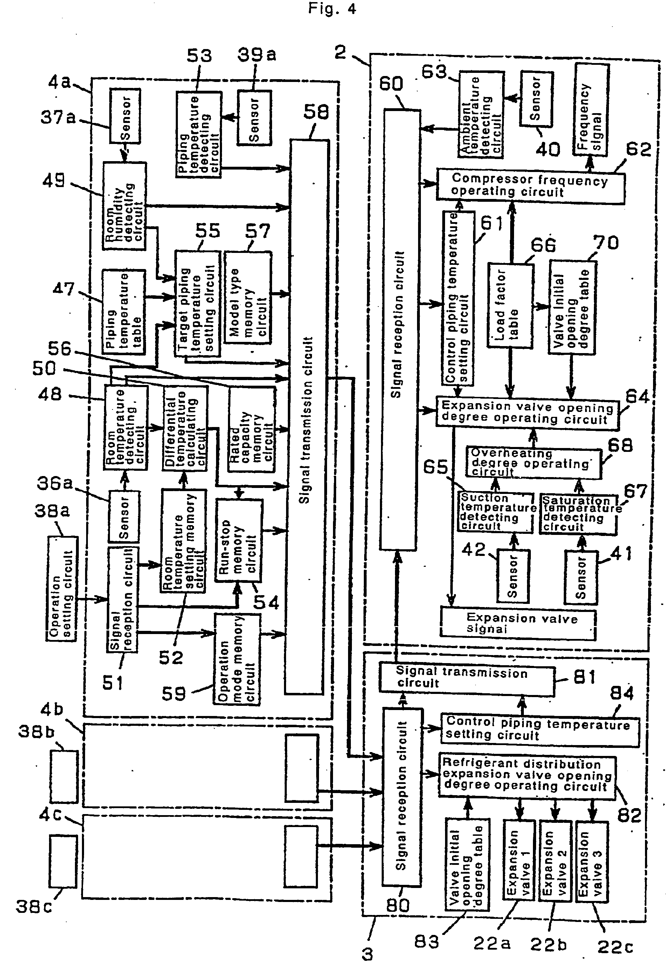

The control and flow of compressor frequency and motor-driven expansion valve are explained. A block diagram showing control and flow of compressor frequency and motor-driven expansion valve is shown in Fig. 4. By the relation of detection of temperature, humidity and piping temperature, and setting of operation, signals of differential temperature, room load level, and target piping temperature are transmitted from plural indoor units, and the compressor frequency and motor-driven expansion valve are controlled.

First, in the indoor unit 4a, the output of the room temperature sensor 36a is sent out from a room temperature detecting circuit 48 to a differential temperature calculating circuit 50 as temperature signal. The signal from an operating setting circuit 38a is received in a signal receiving circuit 51. The temperature setting set in the operation setting circuit 38a is stored in a room temperature setting memory circuit 52. This temperature setting is sent out to the differential temperature calculating circuit 50. In the differential temperature calculating circuit 50, the differential temperature $\Delta T = Tr - Ts$ is calculated. This differential temperature $\Delta T$ is the differential temperature signal. The room temperature is Tr, and the set temperature is Ts. The differential temperature calculating circuit 50 is one kind of differential temperature calculating means. The room temperature setting memory circuit 52 is one kind of room temperature setting memory means.

The operation setting circuit 38a can set, aside from the temperature, also run/stop signal, operation mode such as cooling, dehumidifying and heating, air flow rate, automatic air flow rate, wind direction and automatic wind direction.

In the indoor unit 4a, the output of the room humidity sensor 37a is sent out from the room humidity detecting circuit 49 to the target piping temperature setting circuit 55 as humidity signal. The output of the room temperature sensor 36a is sent out from the room temperature detecting circuit 48 to the target piping temperature setting circuit 55 as temperature signal. From the target piping temperature table 47, the target piping temperature controlled by the heat exchanger 12a of the indoor unit 4a is set. The piping temperature of the heat exchanger 12a is transmitted by the piping temperature sensor 39a and piping temperature detecting circuit 53 as piping temperature signal. The target piping temperature setting circuit 55 is one kind of target piping temperature setting means.

In the run/stop memory circuit 54, the signal set in the operation setting circuit 38a is received in the signal receiving circuit 51, and the run (ON) or stop (OFF) of the indoor unit 4a is stored. The run/stop memory circuit 54 is one kind of run/stop memory means.

In the operation mode memory circuit 59, the signal set in the operation setting circuit 38a is received in the signal receiving circuit 51, and the operation mode of cooling, dehumidifying or heating of the indoor unit 4a is stored. In the rated capacity memory circuit 56, the rated capacity of the indoor unit 4a is stored. In the model type memory circuit 57, the model type of the indoor unit 4a such as wall-mount type or ceiling built-in type is stored. The rated capacity signal, differential temperature signal, target piping temperature signal, operation mode signal, run/stop signal, model type signal, room temperature signal, room humidity signal, and piping temperature signal are sent out from a signal transmitting circuit 58 to a signal receiving circuit 80 in the branch unit 3, and these signals are sent out to a signal receiving circuit 60 of the outdoor unit 2 from a signal transmitting circuit 81. The signals received in the signal receiving circuit 60 are sent out to the compressor frequency operating circuit 62 and an expansion valve opening degree operating circuit 64. The rated capacity memory circuit 56 is one kind of rated capacity memory means. The model type memory circuit 57 is one kind of model type memory means. The compressor frequency operating circuit 62 is one kind of compressor frequency operating means. The expansion valve opening degree operating circuit 64 is one kind of expansion valve opening degree operating means.

In the branch unit 3, the signals transmitted from the plural indoor units 4a, 4b, 4c are received in the signal receiving circuit 80, and the highest temperature of the individual target piping temperatures is set in a control piping temperature operating circuit 84. The control piping temperature operating circuit 84 is one kind of control piping temperature operating means. The temperature data is transmitted from the signal transmitting circuit 81 of the branch unit 3 to the signal receiving circuit 60 of the indoor unit.

In the branch unit 3, from the signals transmitted from the plural indoor units 4a, 4b, 4c, that is, the rated capacity signal, differential temperature signal, operation mode signal, run/stop signal and model type signal, the refrigerant distribution expansion valve opening degree operating circuit 82 calculates the refrigerant distribution ratio. On the basis of this refrigerant distribution ratio, the opening degree of the refrigerant distribution expansion valves 22a, 22b, 22c is set.

In the outdoor unit 2, the compressor frequency operating circuit 62 sets the load coefficient from the load coefficient table 66 on the basis of the rated capacity signal, differential temperature signal, operation mode signal and run/stop signal received from the indoor units 4a, 4b, 4c, and calculated as specified. As a result, the operation frequency is calculated.

The expansion valve opening degree operating circuit 64 operates as specified from the load coefficient table 66 and valve initial opening degree table 70, similarly on the basis of the rated capacity signal, differential temperature signal, operation mode signal and run/stop signal received from the indoor units 4a, 4b, 4c. As a result, the opening degree of the motor-driven expansion valve 7 is determined.

Once the compressor frequency and the opening degree of the motor-driven expansion valve are set by the signals from the indoor side, the control piping temperature transmitted from the branch unit 3 is set and stored in the control piping temperature setting circuit 61. The signals of the piping temperature and control piping temperature of the indoor unit transmitting the target piping temperature as the object of control are sent out to the compressor frequency operating circuit 62 or expansion valve opening degree operating circuit 64, and are compared and operated, and the compressor frequency or motor-driven expansion valve opening degree is controlled.

The operation results determined in the compressor frequency operating circuit 62 and expansion valve opening degree operating circuit 64 are sent out to a compressor driving circuit (not shown) and an expansion valve driving circuit (not shown) as frequency signal and expansion valve opening degree signal, and the frequency of the compressor 6 and the opening degree of the motor-driven expansion valve 7 are controlled. Besides, the output of the ambient temperature sensor 40 is detected by the ambient temperature detecting circuit 63, and when the ambient temperature is changed, the expansion valve opening degree operating circuit 64 controls the expansion valve.

The outputs of the saturation temperature sensor 41 and suction temperature sensor 42 are detected by the saturation temperature detecting circuit 67 and suction temperature detecting circuit 65. The detected results are compared and operated in an overheating degree operating circuit 68, and the expansion valve opening degree operating circuit 64 controls the expansion valve.

Hereinafter, in every specified period, on the basis of the rated capacity signal, differential temperature signal, operation mode signal and run/stop signal, the frequency number of the compressor 6 and the opening degree of the motor-driven expansion valve 7 are calculated, and the frequency of the compressor 6 and the opening degree of the motor-driven expansion valve 7 are controlled.

Incidentally, the -heating operation is not the main object of the invention, and its explanation is omitted.

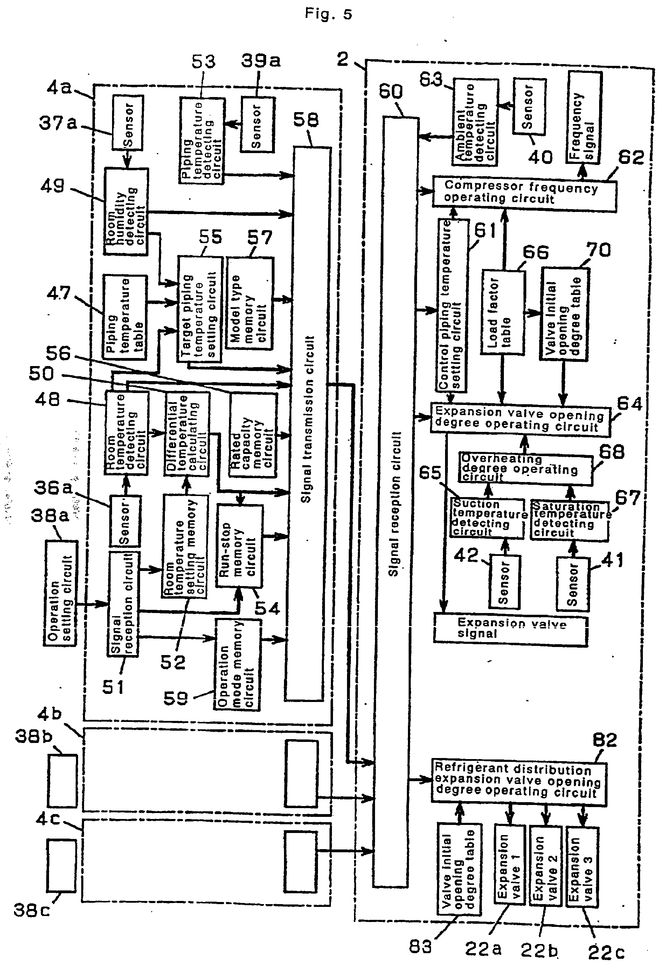

Fig. 5 is a block diagram of a multi-room air conditioner having a structure of receiving signals from plural indoor units directly by an outdoor unit. In Fig. 5, the refrigerant distribution expansion valves 22a, 22b, 22c of the branch unit 3 are controlled by the outdoor unit 2. The control operation of the branch unit 3 is same as mentioned above, and its explanation is omitted.

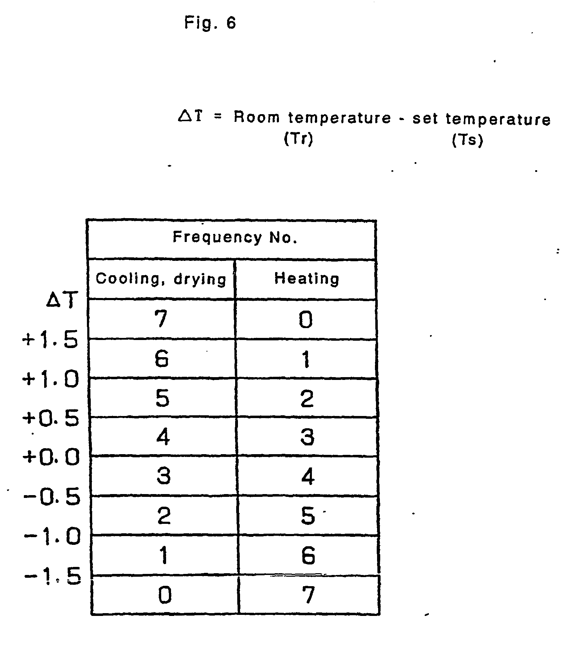

The control method of the compressor frequency is explained. Fig. 6 is a temperature zone division diagram of differential temperature $\Delta T$ of room temperature Tr and set temperature Ts.

In the indoor unit 4a, the output of the room temperature sensor 36a is sent out from the room temperature detecting circuit 48 to the differential temperature operating means 22 as temperature signal. In the room temperature setting means 23, the set temperature set in the operation setting circuit 18a and the operation mode are stored and judged, and sent out to the differential temperature operating means 22. In the differential temperature operating means 22, the differential temperature $\Delta T$ (= Tr - Ts) is calculated, and this differential temperature $\Delta T$ is converted into a load number Ln value shown in Fig. 6. This load number Ln value is the differential temperature signal. For example, in cooling operation, in the case of Tr = 27.3°C and Ts = 26°C, the differential temperature $\Delta T$ is 1.3°C, and Ln is 6.

From the individual rated capacity signal, differential temperature signal, operation mode signal and run/stop signal of the indoor units 4a, 4b, 4c, the load constant is read out from the load constant table 66 shown in Table 1, and by multiplying the sum of the load constants by a specific constant, the frequency of the compressor 6 is determined.

## Table 1

| Capacity \ Mode | | $L_1$ | $L_2$ | $L_3$ | $L_4$ | $L_5$ | $L_6$ | $L_7$ |
|---|---|---|---|---|---|---|---|---|
| 2.0kW | Cooling, drying | 0 | 0.3 | 0.5 | 0.8 | 1.2 | 1.5 | 2.0 |
| | Heating | 0 | 0.4 | 0.7 | 1.1 | 1.7- | 2.1 | 2.8 |
| 2.5kW | Cooling, drying | 0 | 0.4 | 0.6 | 1.0 | 1.5 | 1.9 | 2.5 |
| | Heating | 0 | 0.5 | 0.9 | 1.4 | 2.2 | 2.7 | 3.6 |
| 3.2kW | Cooling, drying | 0 | 0.5 | 0.8 | 1.3 | 1.9 | 2.4 | 3.2 |
| | Heating | 0 | 0.7 | 1.2 | 2.0 | 2.9 | 3.6 | 4.8 |

For example, when the indoor units are operating in all rooms (4a, 4b, 4c), in two rooms (4a, 4b), and in one room (4a), the signals from the operating indoor units 4a, 4b, 4c are explained in Table 2 (a), Table 2 (b), and Table 2 (c).

Table 2

| (a) Operating in all rooms | | | | |
|---|---|---|---|---|
| Indoor unit | Operation mode | Run/stop Signal | Rated capacity (kW) | Diff. temp. Ln No. |
| 4a | Dry | ON | 2.0 | 6 |

(continued)

| (a) Operating in all rooms | | | | |
|---|---|---|---|---|
| Indoor unit | Operation mode | Run/stop Signal | Rated capacity (kW) | Diff. temp. Ln No. |
| 4b | Dry | ON | 2.5 | 4 |
| 4c | Dry | ON | 3.2 | 5 |
| (b) Operating in two rooms | | | | |
| Indoor unit | Operation Mode | Run/stop signal | Rated capacity (kW) | Diff. temp. Ln No. |
| 4a | Dry | ON | 2.0 | 6 |
| 4b | Dry | ON | 2.5 | 4 |
| 4c | Dry | OFF | 3.2 | 0 |
| (c) Operating in one room | | | | |
| Indoor unit | Operation Mode | Run/stop signal | Rated capacity (kW) | Diff. temp. Ln No. |
| 4a | Dry | ON | 2.0 | 6 |
| 4b | Dry | OFF | 2.5 | 0 |
| 4c | Dry | OFF | 3.2 | 0 |

While all indoor units are operating, the load constants of the indoor units 4a, 4b, 4c are respectively 1.5, 1.0, and 1.9. Therefore, when A is constant, the frequency Hz of the compressor 6 is

$$Hz = A \times (1.5+1.0+1.9) = A \times 4.4$$

This operation result is sent out to the compressor driving circuit (not shown) as frequency signal, and the frequency of the compressor 6 is controlled. Thereafter, in every specific period, the rated capacity signal, differential temperature signal, operation mode signal, and run/stop signal of each one of the indoor units 4a, 4b, 4dc are operated. The result of operation is sent out to the compressor driving circuit (not shown) as frequency signal, and the frequency of the compressor 6 is controlled.

While two indoor units are operating, the load constants of the indoor units 4a, 4b, 4c are respectively 1.5, 1.0, and 0. Therefore, when A is constant, the frequency Hz of the compressor 6 is

$$Hz = A \times (1.5+1.0+0) = A \times 2.5$$

While one indoor unit is operating, the load constants of the indoor units 4a, 4b, 4c are respectively 1.5, 0 and 0. Therefore, when A is constant, the frequency Hz of the compressor 6 is

$$Hz = A \times (1.5+0+0) = A \times 1.5$$

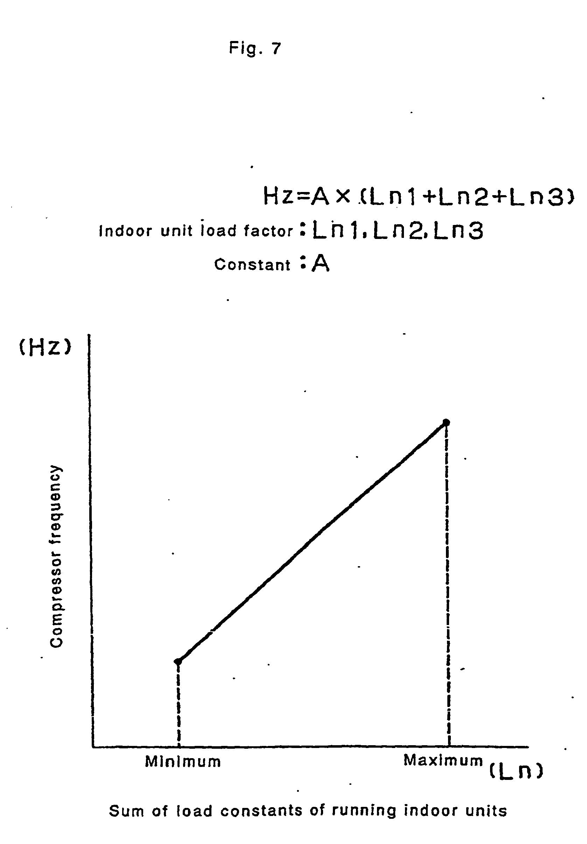

The above results are shown in Fig. 7. Fig. 7 is the relation diagram of the sum of the load constants of the operating indoor units and the compressor frequency.

Next, a control method of indoor unit of multi-room air conditioner in an embodiment of the invention in dehumidifying operation is explained.

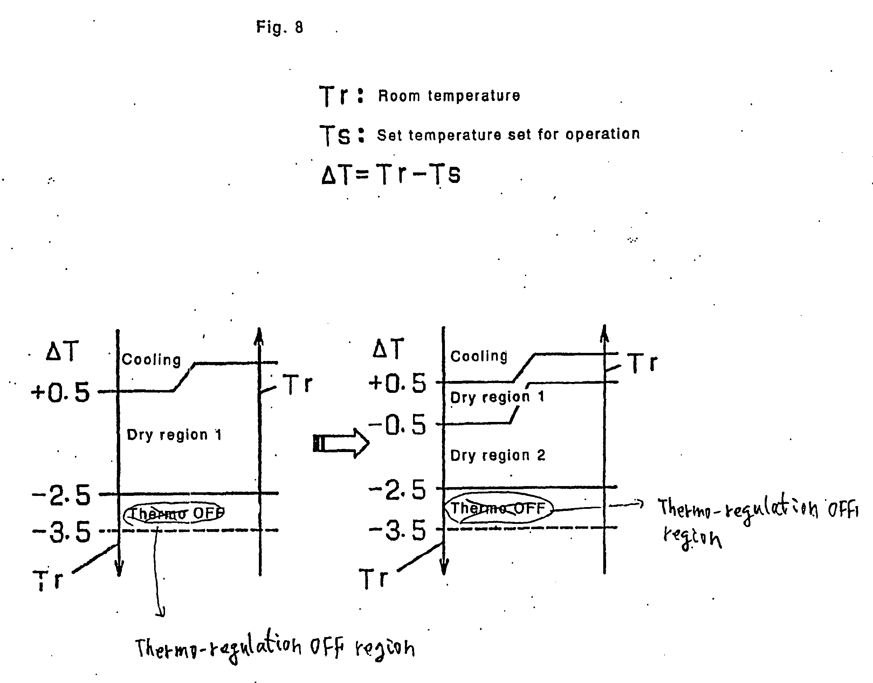

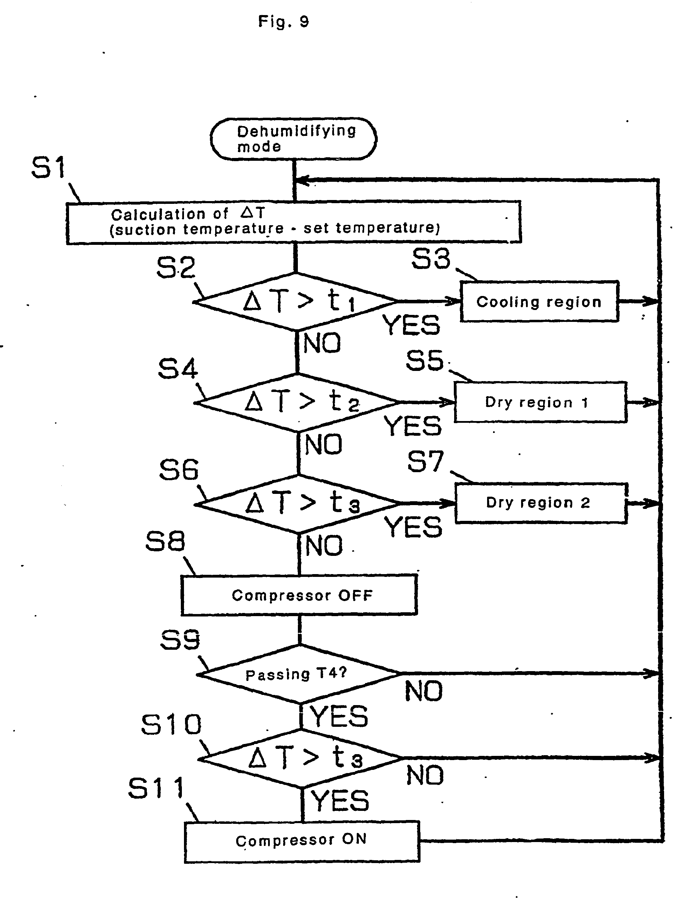

Fig. 8 and Fig. 9 show the control method of cooling, dry 1 and dry 2 regions in dehumidifying mode. First, at step S1, the differential temperature $\Delta T$ of the room temperature (Tr) detected by the room temperature sensor 36a and the set temperature (Ts) set by the user is calculated, and the compressor frequency is determined on the basis of this differential temperature $\Delta T$ as mentioned above.

At step S2, ΔT and t1 (for example, + 0.5°C) are compared, and when ΔT is judged to be larger than t1, cooling operation is started at step S3. If ΔT is judged to be smaller than t1, the process goes to step S4.

At step S4, comparing ΔT and t2 (for example, -0.5°C), if ΔT is judged to be larger than t2, operation in dry region 1 is executed at step S5. When ΔT is judged to be smaller than t2, the process goes to step S6.

At step S6, comparing ΔT and t3 (for example, -2.5°C), if ΔT is judged to be larger than t3, operation in dry region 2 is executed at step S7. When ΔT is judged to be smaller than t3, the operation of the compressor 6 is stopped at step S8.

At next step S9, after stopping the compressor 8, it is judged if a specified time (for example, about 3 minutes) has passed or not. After the specified time, at step S10, ΔT is compared with t3. When ΔT is larger than t3, the compressor 6 is started again at step S11.

The room temperature is sampled in every specified time (for example, about 1 second), and by calculating ΔT on every occasion, the running condition is determined.

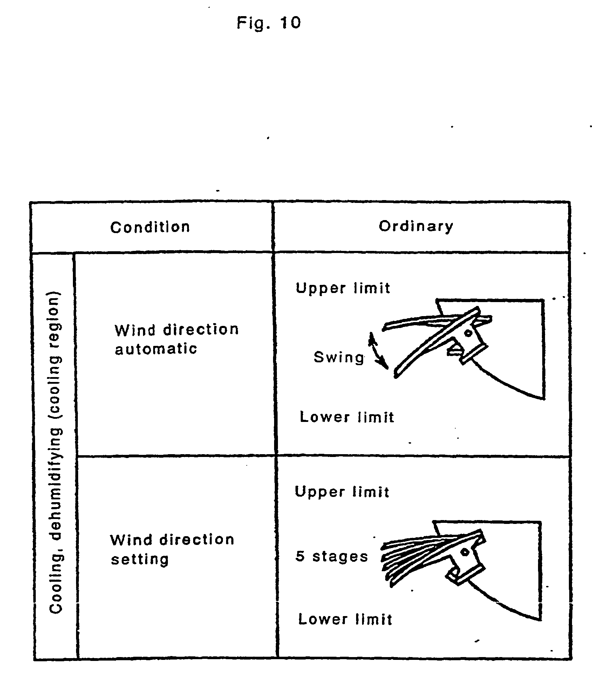

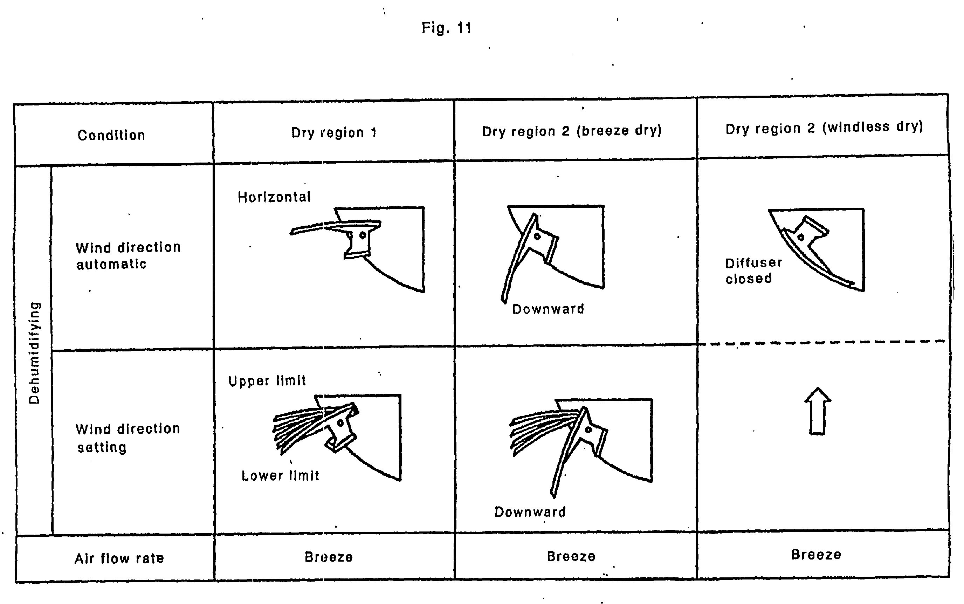

Meanwhile, in cooling operation in dehumidifying mode, when the user setting by the remote controller (not shown) is "wind direction automatic," as shown in Fig. 10, Fig. 11, and Fig. 12, the wind direction changing blade 35 swings between the upper limit position and lower limit position except when the indoor fan 34 is stopped. When the user desires to set the wind direction, it can be set in five steps by the remote controller. In the region near the dry region 1, when the room temperature detected by the room temperature sensor 36a is closer to the room temperature, the compressor frequency decreases extremely (the frequency number is, for example, 1). On the other hand, the indoor fan 22 is at the air flow rate in a range of a light breeze sLo.

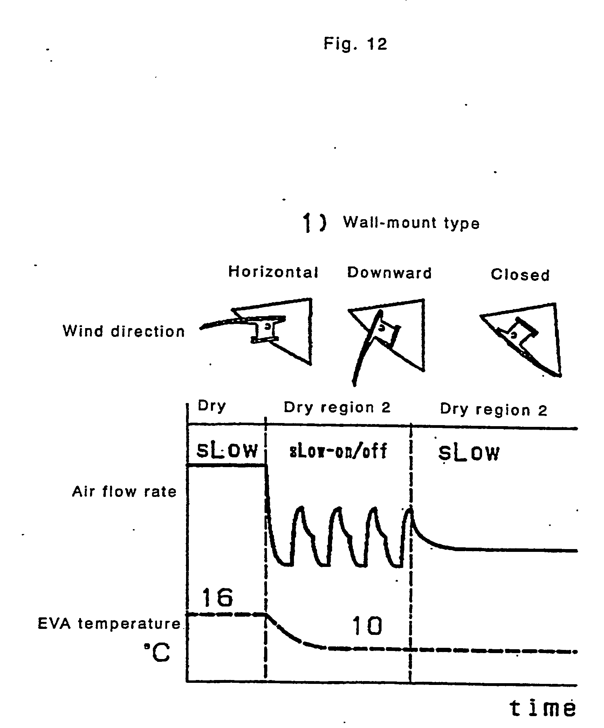

In the dry region 1, considering drop of absolute humidity, the frequency number of the compressor is set, for example, at 3. On the other hand, the air flow from the indoor fan 34 is set at medium air flow or light breeze sLo smaller than Lo. Further, when the wind direction set at "automatic", as shown in Fig. 12, cold feel is decreased by setting the wind direction changing blade 35 nearly in the horizontal direction. In the case of "wind direction setting," on the other hand, same as in the cooling operation in dehumidifying mode, it can be set in five steps by the remote controller.

In the dry region 2, considering drop of relative humidity, the frequency number of the compressor is set, for example, at 2. Further, as described later, the operation is set at either light breeze dry operation or windless stream dry operation depending on the operating condition.

As shown in Fig. 12, the air flow rate in light breeze dry operation is on/off operation of light breeze. In the case of "wind direction automatic," the wind direction changing blade 36 is set at an angle further lower than the lower limit position of the dry region 1. As a result, the cold air does not hit directly the inhabitants. In the case of "wind direction setting," it can be set at five steps from upper limit position to downward position by the remote controller. In the on/off operation of the indoor fan 22, for example, a cycle of running for about 15 seconds and stopping for about 10 seconds is repeated.

On the other hand, in the case of windless dry operation, the air flow rate is set at light breeze. Whether in "wind direction automatic" or in "wind direction setting", the wind direction changing blade 36 is set at a position closing the air diffuser 32 (reset position) or near the closing position. The windless dry operation features the following.

(1) Comfort is presented without giving cold wind feel to the inhabitants (windless feel).

(2) Heat exchange is decreased, the piping temperature is lowered, and the dehumidifying capacity is enhanced (powerful dehumidifying).

(3) Cooling capacity is minimized, and drop of room temperature is kept to a minimum limit (continued dehumidifying power).

This windless dry operation shifts to dry region 2 at step S7 when it is judged Yes at step S6, and starts when any one of the conditions in Table 3 continues (for example, for more than 5 minutes).

Table 3

| Suction temperature | Relative humidity | Piping temperature |
|---|---|---|
| 28°C | Not established | |
| 27°C | Less than 50% | 11°C or more |
| 25°C | Less than 60% | 9°C or more |
| 23°C | Less than 70% | 8°C or more |
| 21°C | Less than 70% | 7°C or more |
| | Less than 70% | 6°C or more |

If the condition is not established, for example, after 10 minutes, it is judged again whether the condition is established or not.

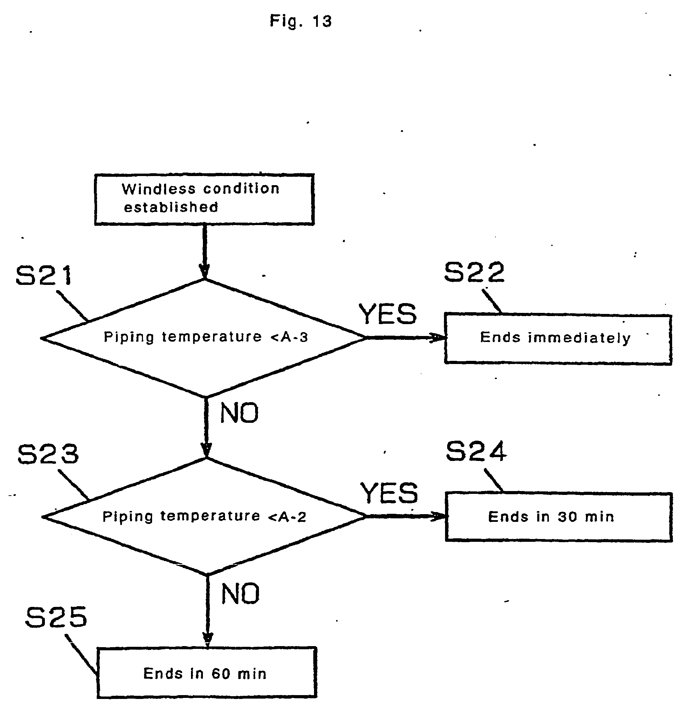

The canceling condition of windless dry operation is explained by referring to the flowchart in Fig. 13.

When the windless operation condition is established, and the wind direction changing blade 35 is held at or near the closing position for a specific time (for example, about 5 minutes), at step S21, it is judged if the piping temperature detected by the piping temperature sensor 39a is smaller than the target piping temperature (A)-3 or not. If smaller, at step S22, windless dry operation is immediately stopped. If larger, the process goes to step S23. At step S23, it is judged if the piping temperature is smaller than the target piping temperature (A)-2 or not. If smaller, at step S24, the windless dry operation continues for 30 minutes, and ends. If larger, going to step S25, the windless dry operation continues for 60 minutes, and ends.

Herein, the target piping temperature (A) is determined according to Table 4, on the basis of the room temperature detected by the room temperature sensor 36a and the relative humidity detected by the humidity sensor 37a.

## Table 4

| Suction temperature (℃) / Relative humidity (%) | t<21 | <23 21≦t | <25 23≦t | <27 25≦t | <28 27≦t | 28≦t |
|---|---|---|---|---|---|---|
| Rh≧70 | Ends immediately. | | | | | |
| 70>Rh≧60 | 11 | 12 | 13 | 15 | 17 | |
| 60>Rh≧50 | 8 | 9 | 10 | 11 | 13 | |
| 50>Rh | 4 | 5 | 6 | 7 | 9 | |

In the case the determining condition of the piping temperature (A) changes in the midst of windless dry operation, for example, when the same condition is maintained for about 2 minutes continuously, the target piping temperature is changed.

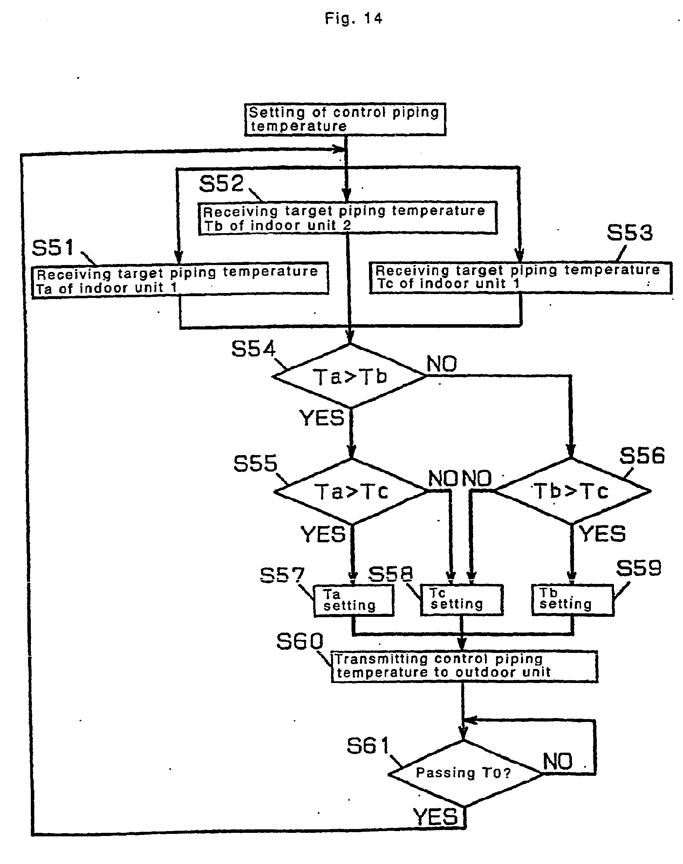

Setting of control piping temperature is explained by referring to the flowchart in Fig. 14.

When the target piping temperatures of a plurality of indoor units are set, at step S51, the target piping temperature Ta of the indoor unit 1 is received. At step S52, the target piping temperature Tb of the indoor unit 2 is received. At step S53, the target piping temperature Tc of the indoor unit 3 is received. In order to select the highest temperature of the target piping temperatures of the plurality of indoor units, at step S54, Ta and Tb are compared. When Ta is higher than Tb, at step S55, Ta and Tc are compared. When Ta is higher than Tc, the control piping temperature is set at Ta, and is transmitted to the outdoor unit. When Tc is higher than Ta at step S55, the control piping temperature is set at Tc. At S54, Ta and Tb are compared. When Tb is higher than Ta at step S54, Tb and Tc are compared at step S56, and when Tb is higher than Tc, the control piping temperature is set at Tb. When Tc is higher than Tb at step S56, the control piping temperature is set at Tc, and is transmitted to the outdoor unit.

Later, at step S61, to update the control piping temperature, after a specific time T0, a target piping temperature is received from the indoor unit, and the control piping temperature is set again.

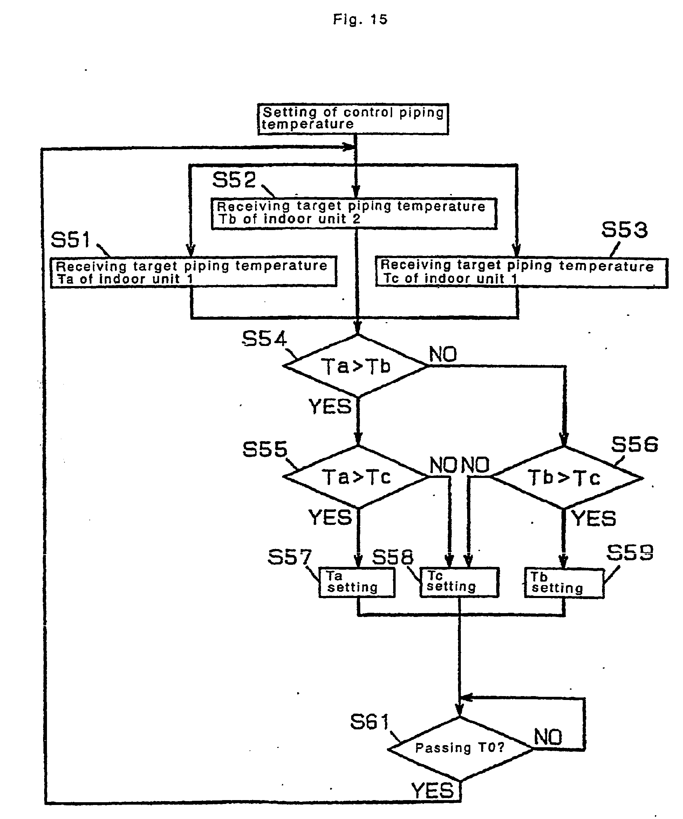

In Fig. 15, when signals of target piping temperature of indoor units are received in the outdoor unit, the control piping temperature is set by comparison of piping temperatures of plural rooms in the same operation as mentioned above, and its explanation is omitted.

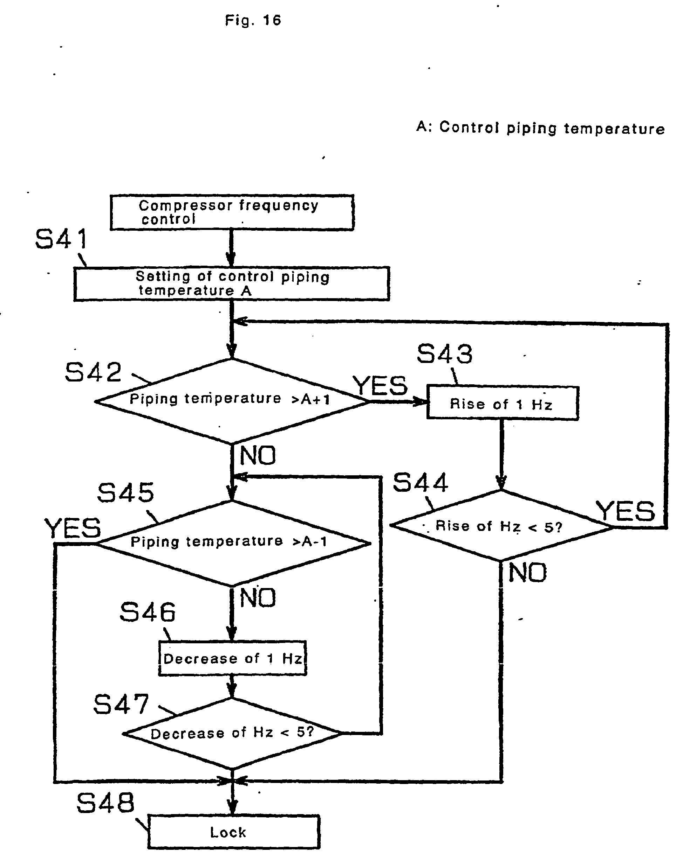

After the control piping temperature is set, the frequency control of the compressor 6 is explained by referring to the flowchart in Fig. 16.

First, at step S41, in a specific time after the control piping temperature A is set, at step S42, the piping temperature detected by the piping temperature sensor of the indoor unit selected for the control piping temperature is judged if larger than A+1 or not. If the piping temperature is larger than A+1, at step S43, the frequency of the compressor 6 is raised by 1 Hz, and at step S44, it is checked if the increment of frequency is smaller than 5 Hz or not. If the increment of frequency is smaller than 5 Hz, in a specific time (for example, about 3 minutes), the process returns to step S42. If the increment of frequency is larger than 5 Hz, going to step S48, the compressor 6 is locked at the present frequency. On the other hand, at step S42, if the piping temperature is smaller than A+1, at step S45, it is checked whether the piping temperature is larger than A-1 or not. If the value is smaller, at step S46, the frequency of the compressor 6 is decreased by 1 Hz, and the process goes to step S47. At step S47, it is checked if the decrement of frequency is smaller than 5 Hz or not. If the value is smaller, after a specific time (for example, about 3 minutes), the process returns to step S45. On the other hand, if the value is larger, at step S48, the compressor 6 is locked at the present frequency. Incidentally, at step S45, if the piping temperature is judged to be larger than A+1, too, the process goes to step S48, and the compressor 6 is locked at the present frequency.

This frequency control of the compressor is the control to be done after the compressor frequency has been determined by the load constant from the indoor unit.

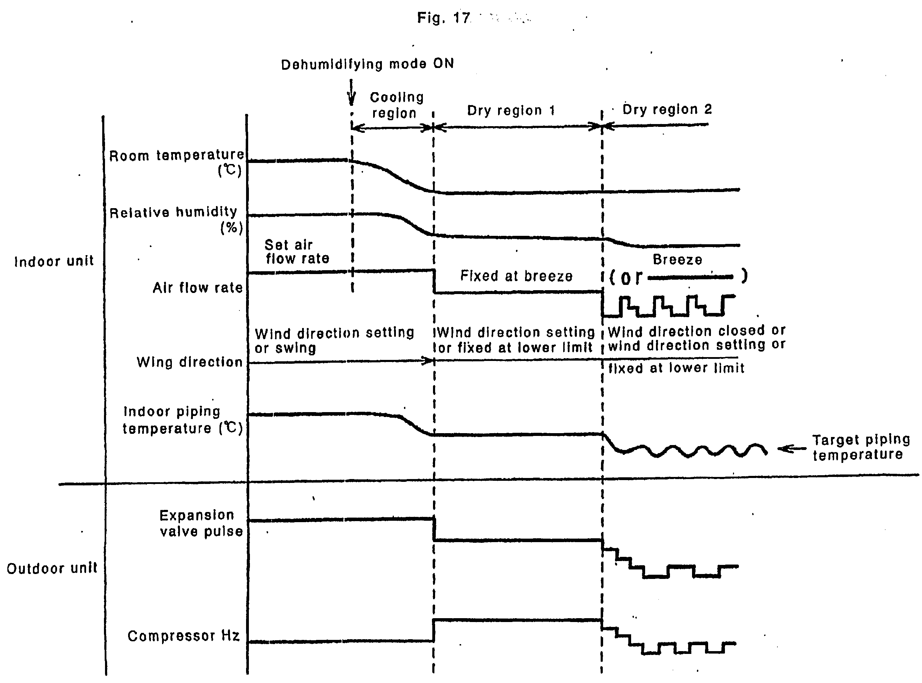

Fig. 17 is an example of control time chart of the indoor unit 1 of a multi-room air conditioner in an embodiment of the invention.

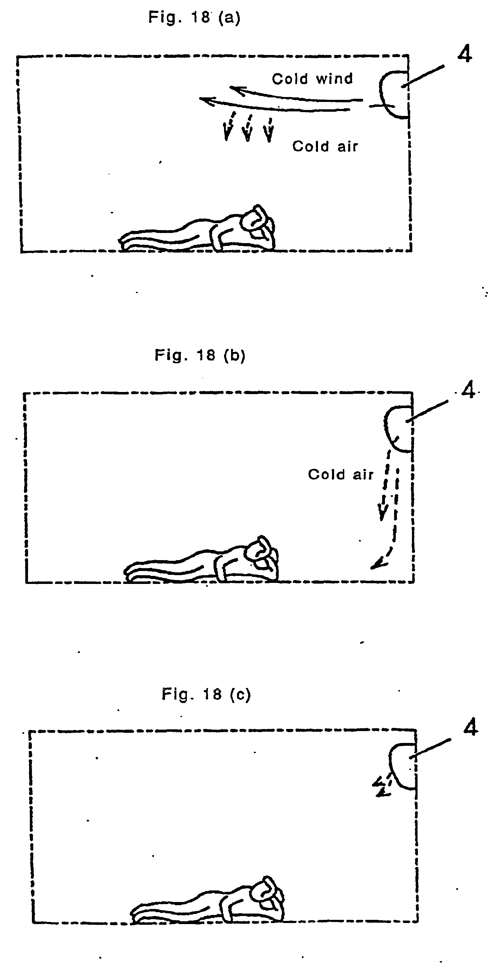

Fig. 18 (a), (b), (c) show flow of cold air by the indoor unit wind direction control in the multi-room air conditioner in the embodiment of the invention. Fig. 18 (a) shows the running state in dry region 1 when setting in "wind direction automatic" in dehumidifying operation, Fig. 18 (b) shows the on/off state of the indoor fan in dry region 2, and Fig. 18 (c) shows the windless dry operation state (c) in dry region 2.

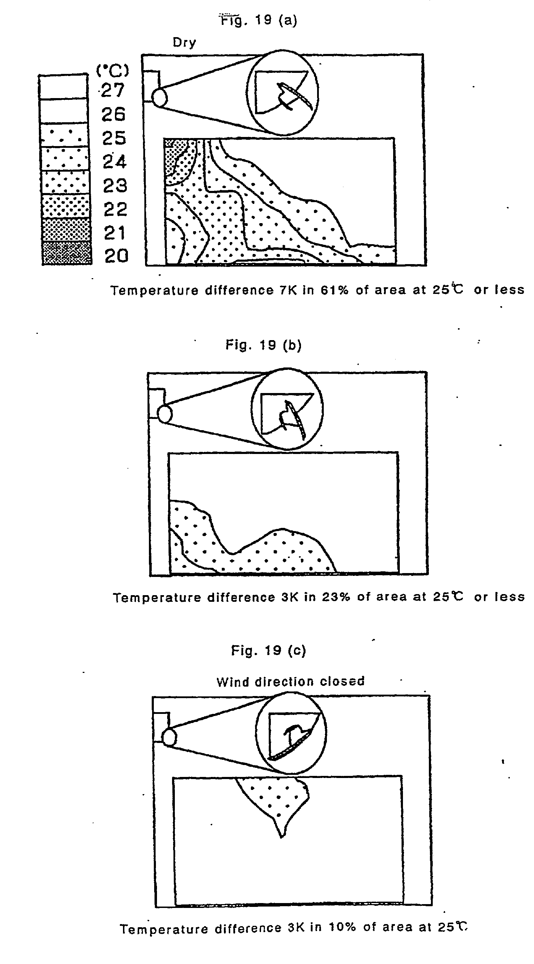

Fig. 19 (a), (b), (c) show room temperature distribution by the indoor unit control in the multi-room air conditioner in the embodiment of the invention, in the vertical direction to the indoor unit diffuser direction. Fig. 19 (a) shows the running state in dry region 1 in dehumidifying operation, Fig. 19 (b) shows the on/off state of the indoor fan in dry region 2, and Fig. 19 (c) shows the windless dry operation state (c) in dry region 2.

As shown in Fig. 17, Fig. 18, and Fig. 19, in dry region 1 operation, the dehumidifying amount is large, and the humidity drops. However, since the cold wind flows horizontally in the upper part of the room, the inhabitants are not directly exposed to the cold wind, but the cold air falls down from the upper part of the room, and the entire room is enveloped in a cold air. As a result, the inhabitants feel coldness by the body. In on/off operation in dry region 2, the inhabitants feel only a slight cold air from beneath, and hardly feel cold wind. The dehumidifying operation is powerful because the piping temperature of the indoor unit is controlled, and dew is not condensed around the diffuser of the indoor unit, and a safe dehumidifying operation is assured. In windless dry operation in dry region 2 (wind direction closed), the inhabitants do not feel cold air from beneath, and the room is dehumidified in windless state, so that the inhabitants feel very comfortable.

**Exemplary Embodiment 2**

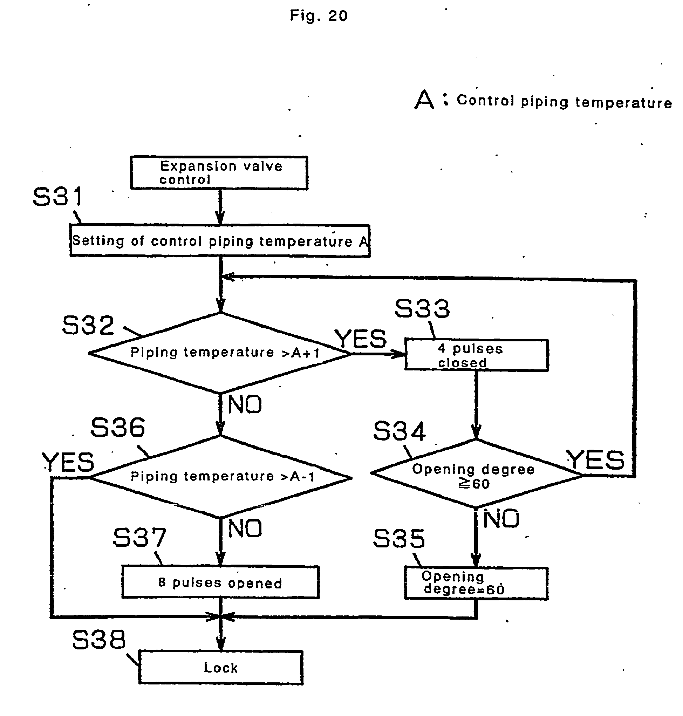

In other exemplary embodiment of the multi-room air conditioner of the invention, control of opening degree of motor-driven expansion valve 7 is explained by referring to the flowchart in Fig. 20.

First, at step S31, in a specific time after the control piping temperature A has been set, at step S32, the piping temperature detected by the piping temperature sensor 24 of the indoor unit selected for the control piping temperature is judged if larger than A+1 or not. If the piping temperature is larger than A+1, at step S33, the motor-driven expansion valve 7 is closed, for example, by 4 pulses, and the valve opening degree is judged at step S34. At this time, if the valve opening degree is larger than the minimum setting pulses (for example, 60 pulses), the process returns to step S32. If this value is smaller than the minimum setting pulses, it is set to the minimum setting pulses at step S35. On the other hand, at step S32, if the piping temperature is smaller than A+1, at step S36, it is checked whether the piping temperature is larger than A-1 or not. If the value is smaller, at step S37, the motor-driven expansion valve 7 is opened, for example, by 8 pulses. If the value is larger, at step S38, the motor-driven expansion valve 7 is locked at the present opening degree.

This control of the motor-driven expansion valve is the control to be done after the opening degree of the expansion valve has been determined by the operation mode and load constant from the indoor unit.

**Exemplary Embodiment 3**

In a different exemplary embodiment of the multi-room air conditioner of the invention, speed control of outdoor fan is explained by referring to Table 5.

## Table 5

| Outdoor fan<br>ComP Hz | Rotating speed |
|---|---|
| 85 Hz or more | 1000 |
| 30≦Hz<85 | 900 |
| 20≦Hz<30 | 500 |
| 16≦Hz<20 | 300 |

Table 5 shows the relation of the speed control of outdoor fan in synchronism with the frequency of the compressor.

In order to keep balance between the refrigerant circulation amount and the heat release amount, it is a feature that the compressor frequency and the outdoor fan speed control are synchronized. Without this operation, the balance between the refrigerant circulation amount and the heat release amount is broken, and an abnormal low pressure operation may take place, and the oil cannot be circulated in the compressor, and the reliability of the compressor cannot be guaranteed.

It is preferred to dehumidify by controlling the piping temperature of the indoor unit. In particular, it is designed to dehumidify while preventing drop of room temperature by minimizing the sensible heat capacity of cooling. For this purpose, the outdoor frequency is set at a low frequency, and by reducing the outdoor fan speed in synchronism, so that the sensible heat capacity is kept small.

### Exemplary Embodiment 4

In a different exemplary embodiment of the multi-room air conditioner of the invention, after setting the target piping temperature in the indoor unit, the target piping temperature is corrected depending on the model type of the indoor unit, whether wall-mount type or ceiling built-in type.

In this constitution, since the dew condensation condition around the diffuser differs with the shape of the diffuser of the indoor unit, the temperature is corrected, and drop of water by dew condensation around the diffuser is prevented.

Herein, correction of target piping temperature is, in the indoor unit, branch unit or outdoor unit, same as correction of target piping temperature in each indoor unit. Hence its explanation is omitted.

### Exemplary Embodiment 5

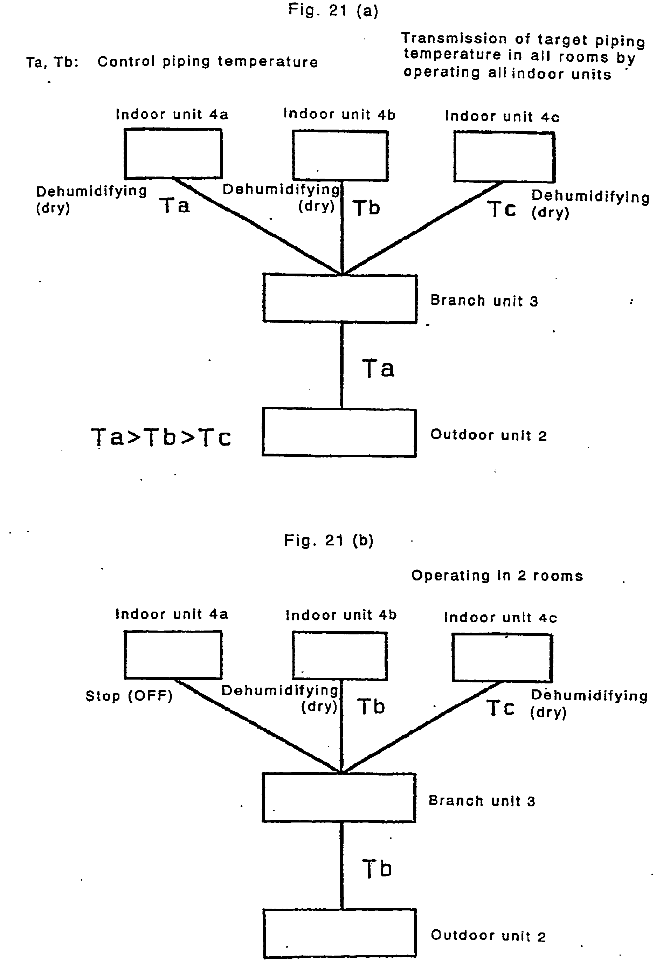

In a different exemplary embodiment of the multi-room air conditioner of the invention, setting control of control piping temperature is explained by referring to Fig. 21 (a) and Fig. 21 (b).

In Fig. 21 (a), plural indoor units are in dehumidifying operation, and the target piping temperatures Ta, Tb, Tc are transmitted to the branch unit 3, and the highest control piping temperature Ta is selected in the branch unit 3, and it is transmitted to the outdoor unit, and the compressor or expansion valve is controlled.

Fig. 21 (b) shows the stopped state of the indoor unit 4a by receiving a stop signal in the running state in Fig. 21 (a). At this time, the indoor unit 4b transmitting the highest target piping temperature next to the indoor unit 4a among the running indoor units is selected for the control piping temperature.

By this control, the control piping temperature is selected from the target piping temperature, and the control continues without interruption. As a result, stable dehumidifying control is realized.

### Exemplary Embodiment 6

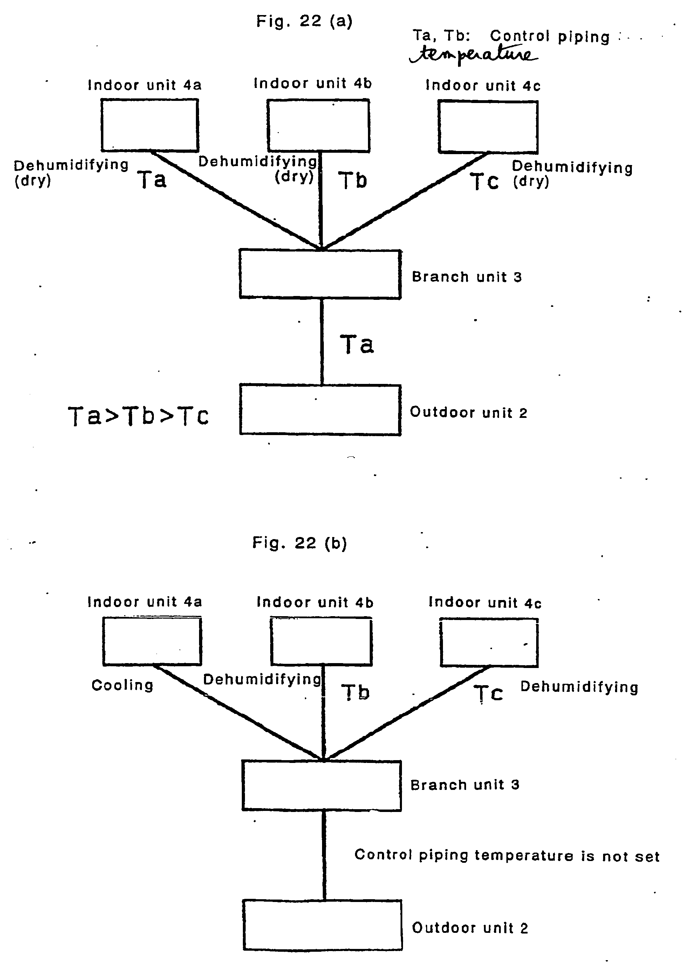

In a different exemplary embodiment of the multi-room air conditioner of the invention, setting control of control piping temperature is explained by referring to Fig. 22 (a) and Fig. 22 (b).

In Fig. 22 (a), plural indoor units are in dehumidifying operation, and the target piping temperatures Ta, Tb, Tc are transmitted to the branch unit 3, and the highest control piping temperature Ta is selected in the branch unit 3, and it is transmitted to the outdoor unit, and the compressor or expansion valve is controlled.

Fig. 22 (b) shows the cooling operation state of the indoor unit 4a in the running state in Fig. 22 (a). At this time, selection of cooling operation among plural indoor units is recognized by the branch unit or outdoor unit. As a result, control of compressor and expansion valve of the outdoor unit from the target piping temperature of the indoor unit is not conducted. By contrast, in the method of control of compressor or expansion valve of the outdoor unit by the target piping temperature from the indoor unit, if operating in one room, in the case of operation of heat exchange with room temperature, extremely, the piping temperature rises, and the dehumidifying amount decreases in dehumidifying operation in other rooms, or the refrigerant circulation amount in cooling operation increases, and the refrigeration distribution is broken, and the performance is lowered and refrigerant noise occurs.

### Exemplary Embodiment 7

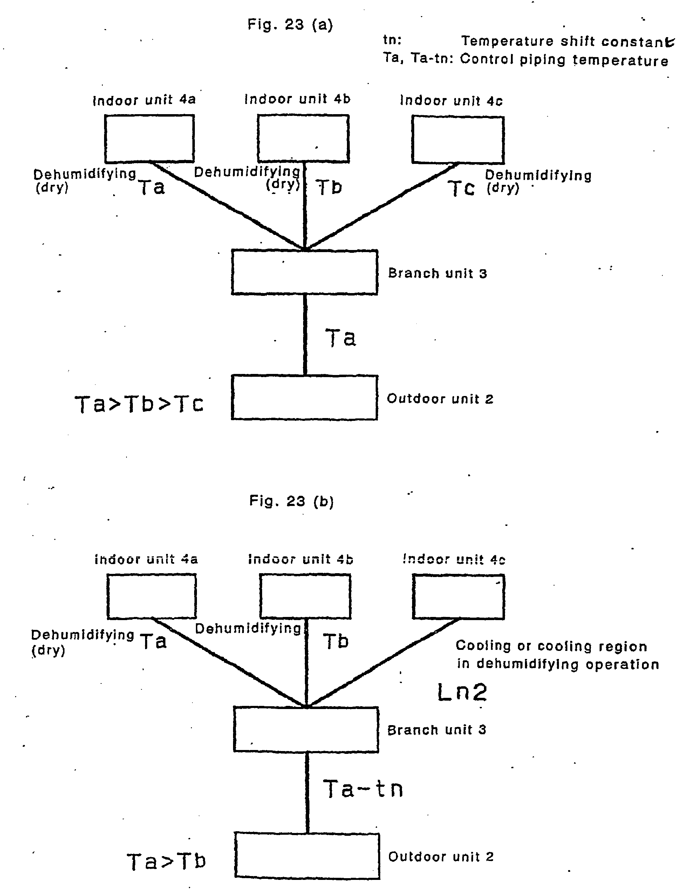

In a different exemplary embodiment of the multi-room air conditioner of the invention, setting control of control piping temperature is explained by referring to Fig. 23 (a) and Fig. 23 (b).

In Fig. 23 (a), plural indoor units are in dehumidifying operation, and the target piping temperatures Ta, Tb, Tc are transmitted to the branch unit 3, and the highest control piping temperature Ta is selected in the branch unit 3, and it is transmitted to the outdoor unit, and the compressor or expansion valve is controlled.

Fig. 23 (b) shows the cooling operation or getting into the cooling region by dehumidifying operation of the indoor unit 4c in the running state in Fig. 23 (a). At this time, the branch unit or outdoor unit recognizes the cooling operation among plural indoor units or selection of cooling operation by getting into the cooling region during dehumidifying operation. In the indoor unit, when it is judged that the load is small (Ln2) from the differential temperature of the room temperature and set temperature, the control piping temperature is set, and is operated, and the compressor and expansion valve of the outdoor unit are controlled.

This operation of the control piping temperature is processed so as to lower the temperature by a specific value. As a result, in the state of cooling operation or getting into cooling region during dehumidifying operation to start cooling operation, the control piping temperature is prevented from elevating by cooling operation.

In the operation, if the operation load is small even in cooling operation, the circulation amount is small, and effects on other rooms are smaller. Accordingly, the control from the control piping temperature to the compressor frequency and expansion valve opening degree can be continued.

**Exemplary Embodiment 8**

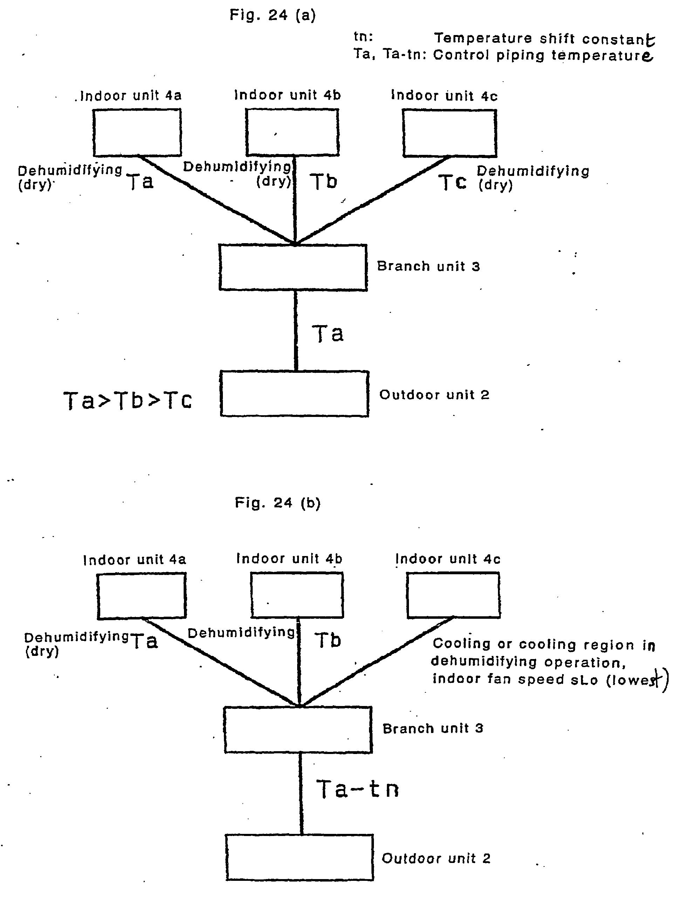

In a different exemplary embodiment of the multi-room air conditioner of the invention, setting control of control piping temperature is explained by referring to Fig. 24 (a) and Fig. 24 (b).

In Fig. 24 (a), plural indoor units are in dehumidifying operation, and the target piping temperatures Ta, Tb, Tc are transmitted to the branch unit 3, and the highest control piping temperature Ta is selected in the branch unit 3, and it is transmitted to the outdoor unit, and the compressor or expansion valve is controlled.

Fig. 24 (b) shows the cooling operation or getting into the cooling region by dehumidifying operation of the indoor unit 4c in the running state in Fig. 24 (a). At this time, the branch unit or outdoor unit recognizes the cooling operation among plural indoor units or selection of cooling operation by getting into the cooling region during dehumidifying operation. When it is judged that the fan of the blower of the indoor unit getting in cooling operation is running at the lowest speed, the control piping temperature is set, and is operated, and the compressor and expansion valve of the outdoor unit are controlled.

This operation of the control piping temperature is processed so as to lower the temperature by a specific value. As a result, in the state of cooling operation or getting into cooling region during dehumidifying operation to start cooling operation, the control piping temperature is prevented from elevating by cooling operation.

In the operation, if the fan speed of the indoor unit in cooling operation is lowest, heat exchange amount is small, and effects on other rooms are smaller, so that the control from the control piping temperature to the compressor frequency and expansion valve opening degree can be continued.

**Exemplary Embodiment 9**

In a different exemplary embodiment of the multi-room air conditioner of the invention, overheating degree control of the compressor by the expansion valve control is explained by referring to Table 6.

**Table 6**

| Ambient temperature | $\Delta t_{SH}$ |
|---|---|
| $28° \leqq T_{out}$ | 4 |
| $22 \leqq T_{out} < 28$ | 6 |
| $T_{out} < 22$ | 8 |

Ambient temperature $T_{out}$

$$\Delta t_{SH} = \text{Suction temperature} (T_{svc}) - \text{saturation temperature} (T_{sat})$$

In Table 6, plural indoor units are in dehumidifying operation, and the target piping temperatures Ta, Tb, Tc are transmitted to the branch unit 3, and the highest control piping temperature Ta is selected by the outdoor unit 3, and it is transmitted to the outdoor unit, and the compressor or expansion valve is controlled. In this state, depending on the ambient temperature, the opening degree of the expansion valve for controlling the overheating degree ($\Delta t_{SH}$) of the compressor is varied.

$$\triangle t_{SH} = \text{suction temperature(Tsuc)} - \text{saturation temperature(Tsat)}$$

As the ambient temperature declines, the overheating degree of the compressor increases, and the cooling capacity in the indoor unit in the refrigeration cycle is decreased. By this control operation, when the ambient temperature becomes relatively low (for example, in the morning in the rainy season), and the temperature of the indoor unit reaches the set temperature, only the humidity can be removed without lowering the temperature.

**Exemplary Embodiment 10**

In a different exemplary embodiment of the multi-room air conditioner of the invention, overheating degree control of the compressor by the expansion valve control is explained by referring to Table 7.

**Table 7**

| ComP (Hz) | $\triangle t_{SH}$ |
|---|---|
| $24 \leqq Hz$ | 4 |
| $20 \leqq Hz < 24$ | 6 |
| $16 \leqq Hz < 20$ | 8 |

Compressor frequency: Comp Hz

$$\triangle t_{SH} = \text{Suction temperature} - \text{saturation temperature}$$
$$\text{(Tsvc)} \qquad \text{(Tsat)}$$

In Table 7, plural indoor units are in dehumidifying operation, and the target piping temperatures Ta, Tb, Tc are transmitted to the branch unit 3, and the highest control piping temperature Ta is selected by the outdoor unit 3, and it is transmitted to the outdoor unit, and the compressor or expansion valve is controlled, and in this state, depending on the compressor frequency, the opening degree of the expansion valve for controlling the overheating degree ($\Delta t_{SH}$) of the compressor is varied.

$$\triangle t_{SH} = \text{suction temperature(Tsuc)} - \text{saturation temperature(Tsat)}$$

As the compressor frequency is controlled to be lowered, the overheating degree of the compressor increases, and the cooling capacity in the indoor unit in the refrigeration cycle is decreased. By this control operation, when the compressor frequency becomes relatively low, and the dehumidifying operation is done in lowered room temperature state, and the temperature of the indoor unit reaches the set temperature, only the humidity can be removed without lowering the temperature.

**Exemplary Embodiment 11**

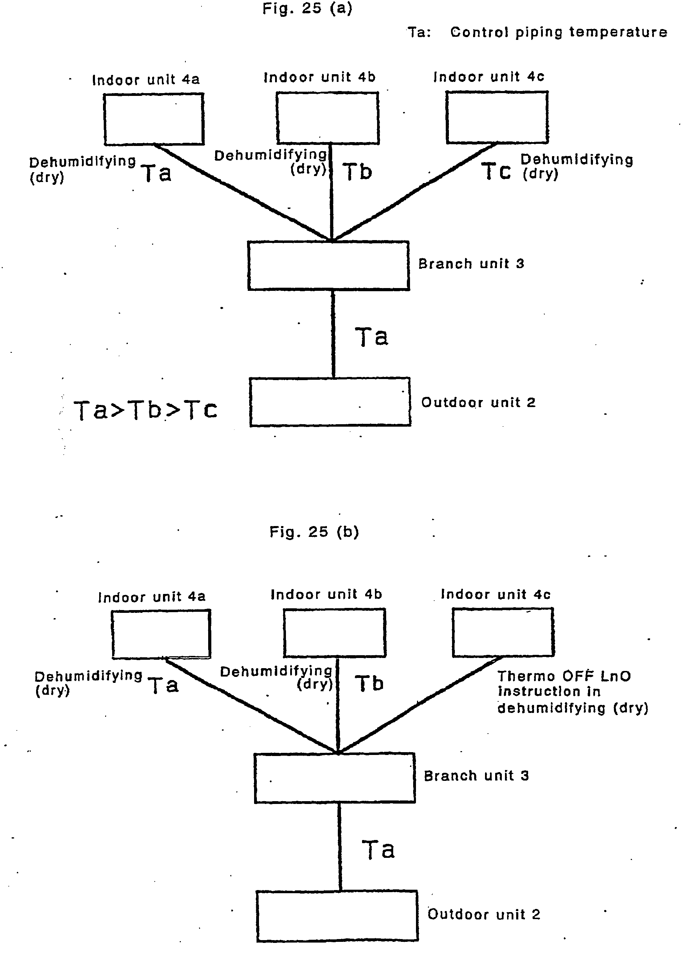

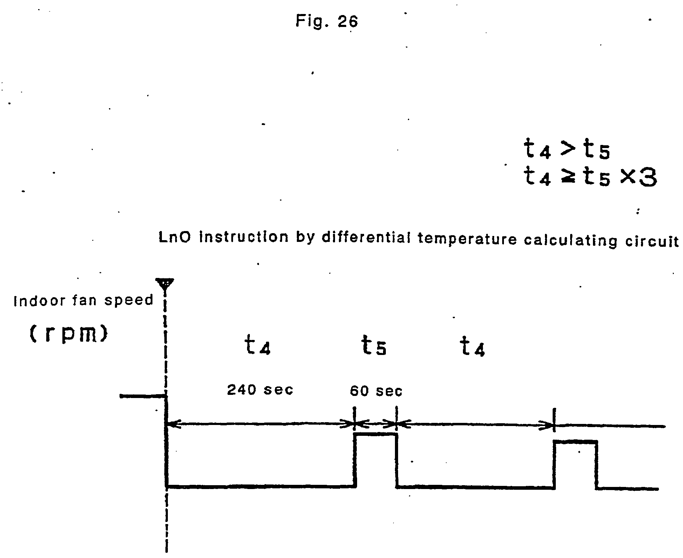

In a different exemplary embodiment of the multi-room air conditioner of the invention, control of the indoor unit stopped by judgment of differential temperature in other room during control operation at the control piping temperature is explained by referring to Fig. 25 (a), Fig. 25 (b), and Fig. 26.

In Fig. 25 (a), plural indoor units are in dehumidifying operation, and the target piping temperatures Ta, Tb, Tc are transmitted to the branch unit 3, and the highest control piping temperature Ta is selected in the branch unit 3, and it is transmitted to the outdoor unit, and the compressor or expansion valve is controlled.

In Fig. 25 (b), during dehumidifying operation of the indoor unit 4c in the running state in Fig. 25 (a), when stopping of operation is judged by zero load factor (Ln0) from the differential temperature of room temperature and set temperature, the indoor fan is stopped for t4 time from the stopping time of operation, and then operating for t5 time, and then the indoor fan is stopped for about t4 time. The indoor fan is controlled in this manner.

Plural indoor units are in dehumidifying operation, and the target piping temperatures Ta, Tb, Tc are transmitted to the branch unit 3, and the highest control piping temperature Ta is selected in the branch unit 3, and it is transmitted to the outdoor unit, and the compressor or expansion valve is controlled. In this constitution, when the indoor unit of one room is stopped in this state and the indoor fan is operated immediately after, water drops formed on the indoor heat exchanger are prevented from being evaporated again to be supplied into the room. Further, when stopping the indoor fan for a longer time, in order to prevent dew condensation water in the wind tunnel of the indoor unit, by operating for a while, the temperature of the indoor unit is sampled while suppressing re-evaporation. As a result, dew condensation in the wind tunnel can be prevented.

By the constitution of the invention, the following effects are obtained

The multi-room air conditioner of the embodiment has a constitution in which in order to dehumidify powerfully by a plurality of indoor units, the target piping temperature is set on the basis of the room temperature and the room humidity, and the highest temperature is selected, and the compressor frequency and expansion valve are controlled. In this constitution, the multi-room air conditioner connecting a plurality of indoor units has a simple structure, and assures safe and enough dehumidifying amount without condensing dew around the diffuser.

The multi-room air conditioner of exemplary embodiment 2 has a constitution in which the piping temperature of the indoor unit is controlled by varying the opening degree of the expansion valve. In this constitution, the lower input and finer adjustment can be controlled, and the energy-saving property and control stability against dehumidifying load fluctuations are enhanced.

The multi-room air conditioner of exemplary embodiment 3 has a constitution in which the outdoor fan control is decreased in synchronism when the frequency instruction of the compressor from the indoor side becomes a low frequency instruction. In this constitution, the refrigerant circulation amount and heat release amount are balanced, and abnormal low pressure operation is prevented, and oil circulation of the compressor is enabled. As a result, the reliability of the compressor is assured, and low input operation is possible.

The multi-room air conditioner of exemplary embodiment 4 has a constitution in which the target piping temperature can be varied depending on the model type of the indoor unit. In this constitution, the target piping temperature can be corrected so that the limit of dew condensation around the diffuser may be different in each model type of the indoor unit. As a result, depending on the model type, dew condensation around the diffuser is prevented, and safe operation is assured.

According to the constitution of the multi-room air conditioner of exemplary embodiment 5, while the compressor frequency or expansion valve is controlled by the target piping temperature of the plurality of indoor units, if the indoor unit selected from the control piping temperature is stopped, the control of the compressor frequency and expansion valve opening degree can be continued if a signal of target piping temperature is issued from other room.

The multi-room air conditioner of exemplary embodiment 6 has a constitution in which if other indoor unit is put in cooling operation while plural indoor units are in dehumidifying operation, control on the basis of the target control temperature is not executed. In this constitution, the control of compressor frequency and expansion valve on the basis of the target piping temperature is stopped. As a result, safe operation of the air conditioner is assured. That is, in the state of the control of compressor frequency or expansion valve by the target piping temperature in the plurality of indoor units, when the indoor unit selected for the control piping temperature is put in cooling operation, the piping temperature of the indoor unit rises, and the dehumidifying amount drops. Or when the piping temperature is lowered, dew may be condensed around the diffuser in the indoor unit in cooling operation. Such defects are eliminated by this constitution, and safe operation is assured.

According to the constitution of the multi-room air conditioner of exemplary embodiment 7, in the state of the control of compressor frequency or expansion valve by the target piping temperature in the plurality of indoor units, if the indoor unit selected for the control piping temperature is put in cooling operation, when the load constant of the indoor unit in cooling operation is low, the refrigerant circulation amount is small and the temperature exchange of the heat exchanger is small. As a result, the piping temperature hardly rises. Hence, drop of dehumidifying amount in other indoor units and flow changing sound of refrigerant circulation amount do not occur. Hence, the control of compressor frequency and expansion valve on the basis of the target piping temperature continues, so that safe operation is realized.

According to the constitution of the multi-room air conditioner of exemplary embodiment 8, in the state of the control of compressor frequency or expansion valve by the target piping temperature in the plurality of indoor units, if the indoor unit selected for the control piping temperature is put in cooling operation, when fan speed of the indoor unit in cooling operation is the lowest speed, the temperature exchange of the heat exchanger is small, and the piping temperature hardly rises. Hence, drop of dehumidifying amount in other indoor units and flow changing sound of refrigerant circulation amount do not occur. Hence, the control of compressor frequency and expansion valve on the basis of the target piping temperature continues, so that safe operation is realized.

According to the constitution of the multi-room air conditioner of exemplary embodiment 9, in the state of control of compressor frequency by the target piping temperature in the plurality of indoor units, by throttling the opening degree of the expansion valve controlling the value of the overheating degree of the compressor depending on drop or change of the ambient temperature, it is controlled to raise the overheating degree, and the indoor cooling capacity is lowered by drop of the ambient temperature. As a result, drop of room temperature is prevented, and dehumidifying operation can be continued.

According to the constitution of the multi-room air conditioner of exemplary embodiment 10, in the state of control of compressor frequency by the target piping temperature in the plurality of indoor units, by throttling the opening degree of the expansion valve controlling the value of the overheating degree of the compressor depending on drop or change of the compressor frequency, it is controlled to raise the overheating degree, and the refrigerant circulation amount is lowered by drop of the compressor frequency, so that the indoor cooling capacity is lowered. As a result, drop of room temperature is prevented, and dehumidifying operation can be continued.

According to the constitution of the multi-room air conditioner of exemplary embodiment 11, in the state of the control of compressor frequency or expansion valve by the target piping temperature in the plurality of indoor units, if the indoor unit selected for the control piping temperature is stopped due to differential temperature operation of the room temperature and set temperature, the fan of the stopped indoor unit is stopped, and then intermittent operation is started, and therefore re-evaporation upon start of operation of the fan of the stopped indoor unit is prevented, and room temperature can be sampled in the subsequent intermittent operation, and dew condensation in the wind tunnel can be prevented.

As described herein, according to the constitution, the multi-room air conditioner having the following features is obtained. The dehumidifying performance is enhanced. Air stream feel and cold wind feel for the inhabitants are suppressed. Energy-saving performance and silent operation are excellent. Dew condensation is prevented around the diffuser of the indoor unit. Individual temperature controllability of each indoor unit is excellent. The cost performance is excellent and it is inexpensive. A windless dehumidifying operation suppressed in air stream feel and cold wind feel is realized.

**Claims**

1. A multi-room air conditioner comprising:

(a) one outdoor unit (2) including a variable capacity compressor (6), an outdoor heat exchanger (8), a refrigerant liquid side main pipe (14), a refrigerant gas side main pipe (18), and a motor-driven expansion valve (7),
a refrigerant liquid flowing in said refrigerant liquid side main pipe, and
a refrigerant gas flowing in said refrigerant gas side main pipe,
(b) a plurality of indoor units (4a, 4b, 4c),
each one of said plurality of indoor units having a indoor heat exchanger (12a, 12b, 12c), and
(c) refrigerant liquid side branch pipes (16a, 16b, 16c) branched off from said refrigerant liquid side main pipe and refrigerant gas side branch pipes (20a, 20b, 20c) branched off from said refrigerant gas side main pipe, and motor-driven refrigerant distribution expansion valves (22a, 22b, 22c) installed in said refrigerant liquid side branch pipes, installed between said outdoor unit and plurality of indoor units,

wherein each one of said indoor units (4a, 4b, 4c) comprising:

room temperature setting memory means (52) for storing a set room temperature,
room temperature detecting means (36a, 36b, 36c) for detecting a room temperature,
room humidity detecting means (37a, 37b, 37c) for detecting a room humidity,
piping temperature detecting means (39a, 39b, 39c) for detecting a piping temperature of said indoor heat exchanger,
differential temperature calculating means (50) for calculating a differential temperature of said set room temperature and said room temperature on the basis of said room temperature setting memory means and room temperature detecting means,
rated capacity memory means (56) for storing a rated capacity of said each indoor unit,
model type memory means (57) for storing a model type of said each indoor unit,
run/stop memory means (54) for storing whether said each indoor unit is in running state or stopped state,
target piping temperature setting means (55) for setting and storing a target piping temperature on the basis of a room temperature detected by said room temperature detecting means and a humidity detected by said room humidity detecting means,

and wherein the outdoor unit (2) comprises :

expansion valve opening degree operating means (64) for controlling an opening degree of said motor-driven expansion valve,

compressor frequency operating means (62) for controlling a capacity of said variable capacity compressor, and control piping temperature setting means (61) for setting the highest target piping temperature of said target piping temperatures of said indoor unit as the control piping temperature, and

wherein said compressor frequency operating means compares said control piping temperature and said piping temperature of said indoor unit adopted as said control piping temperature, and controls the capacity of said variable capacity compressor of said outdoor unit.

2. The multi-room air conditioner of claim 1,
wherein said expansion valve opening degree operating means compares said control piping temperature and said piping temperature of said indoor unit adopted as said control piping temperature, and controls the opening degree of said motor-driven expansion valve.

3. The multi-room air conditioner of claim 1,
wherein said outdoor unit has an outdoor blower, and
said outdoor blower is controlled in synchronism with the control of said capacity of said compressor.

4. The multi-room air conditioner of any one of claims 1 to 3, wherein said model type memory means is capable of changing said target control temperature stored in said each indoor unit.

5. The multi-room air conditioner of any one of claims 1 to 3,
wherein if said indoor unit selected for said control piping temperature stores the stopped state by said run/stop memory means, the target piping temperature of the indoor unit of the second highest target piping temperature is changed as the object of control.

6. The multi-room air conditioner of any one of claims 1 to 3, wherein if at least one of said plural indoor units is in dehumidifying operation, a control by the target piping temperature does not take effect if cooling operation is driven in other indoor unit.

7. The multi-room air conditioner of any one of claims 1 to 3,
wherein while at least one of said plural indoor units is in dehumidifying operation,
in other indoor unit, if the load constant obtained from the load constant memory means is lower than the set load constant,
even when cooling operation is done in further other indoor unit, the control piping temperature is set by the target piping temperature transmitted from each indoor unit, and
said control piping temperature is controlled at a further lower temperature than the piping temperature.

8. The multi-room air conditioner of any one of claims 1 to 3,
wherein while at least one of said plural indoor units is in dehumidifying operation,
in other indoor unit, if cooling operation is executed, and a fan speed of an indoor blower is the lowest speed,
the highest target piping temperature of the target piping temperatures sent from the indoor units is set at a control piping temperature of the object of control, and
said control piping temperature is controlled at a further lower temperature than the piping temperature.

9. The multi-room air conditioner of claim 1,
wherein when the target piping temperatures are sent from said plural indoor units and the control piping temperature is set and controlled,
an overheating degree control value of the motor-driven expansion valve controlling the overheating degree of said compressor is changed depending on the changes of an ambient temperature.

10. The multi-room air conditioner of claim 1,
wherein when the target piping temperatures are sent from said plural indoor units and the control piping temperature is set and controlled, the overheating degree control value of said motor-driven expansion valve controlling the overheating degree of said compressor is changed depending on the changes of a compressor frequency.

11. The multi-room air conditioner of any one of claims 1 to 3,

wherein said each indoor unit has an indoor blower,

when the target piping temperatures are sent from said plural indoor units and the control piping temperature is set and controlled,

if one indoor unit of said plural indoor units stores the stopped state by said differential temperature calculating means, the indoor blower of the stopped indoor unit is stopped for a specific time, and then intermittent operation continues.

**12.** The multi-room air conditioner of any one of claims 1 to 3,

wherein said refrigerant liquid side branch pipes (16a, 16b, 16c), gas side branch pipes (20a, 20b, 20c), and motor-driven refrigerant distribution expansion valves (22a, 22b, 22c) compose a branch unit (3), and

said branch unit is installed between said outdoor unit and plurality of indoor units.

**13.** The multi-room air conditioner of any one of claims 1 to 3,

wherein said refrigerant liquid side branch pipes (16a, 16b, 16c), gas side branch pipes (20a, 20b, 20c), and motor-driven refrigerant distribution expansion valves (22a, 22b, 22c) are installed in said outdoor unit.

**14.** A control method of multi-room air conditioner comprising the steps of:

(a) supplying said multi-room air conditioner,
said multi-room air conditioner including one outdoor unit (2) and a plurality of indoor units (4a, 4b, 4c) connected to said outdoor unit,
(b) storing a set room temperature,
(c) detecting a room temperature, a room humidity, and a piping temperature in each one of running units out of said plurality of indoor units,
(d) storing each piping control temperature on the basis of said detected room temperature and room humidity,
(e) setting the highest piping control temperature of said individual piping control temperatures as a control piping temperature, and
(f) comparing said control piping temperature and said piping temperature of the indoor unit adopted as said control piping temperature, and controlling a capacity of a variable capacity compressor (6) installed in said outdoor unit.

**15.** The control method of multi-room air conditioner of claim 14,

wherein said outdoor unit includes a variable capacity compressor (6), an outdoor heat exchanger (8), a refrigerant liquid side main pipe (14), a refrigerant gas side main pipe (18), and a motor-driven expansion valve (7),

each one of said plurality of indoor units (4a, 4b, 4c) has an indoor heat exchanger (12a, 12b, 12c),

said multi-room air conditioner comprises refrigerant liquid side branch pipes (16a, 16b, 16c) branched off from said refrigerant liquid side main pipe, refrigerant gas side branch pipes (20a, 20b, 20c) branched off from said refrigerant gas side main pipe, and motor-driven refrigerant distribution expansion valves (22a, 22b, 22c), installed in said refrigerant liquid side branch pipes, installed between said outdoor unit and plurality of indoor units,

each one of said indoor units (4a, 4b, 4c) comprising:

room temperature setting memory means (52) for storing a set room temperature,
room temperature detecting means (36a, 36b, 36c) for detecting a room temperature,
room humidity detecting means (37a, 37b, 37c) for detecting a room humidity,
piping temperature detecting means (39a, 39b, 39c) for detecting a piping temperature of said indoor heat exchanger,
differential temperature calculating means (50) for calculating a differential temperature of said set room temperature and said room temperature on the basis of said room temperature setting memory means and room temperature detecting means,
rated capacity memory means (56) for storing a rated capacity of said each indoor unit,
model type memory means (57) for storing a model type of said each indoor unit,
run/stop memory means (54) for storing whether said each indoor unit is in running state or stopped state,
target piping temperature setting means (55) for setting and storing a target piping temperature on the basis of the room temperature detected by said room temperature detecting means and the humidity detected by said room humidity detecting means,
expansion valve opening degree calculating means (64) for controlling an opening degree of said motor-driven expansion valve,
compressor frequency operating means (62) for controlling a capacity of said variable capacity compressor, and
control piping temperature setting means (84) for setting the highest target piping temperature of said target piping temperatures of the indoor units as the control piping temperature.

16. The control method of multi-room air conditioner of claim 15,
wherein said step (f) includes a step of comparing said control piping temperature, and said piping temperature of said indoor unit adopted as said control piping temperature, and controlling the opening degree of said motor-driven expansion valve.

17. The control method of multi-room air conditioner of claim 14 or 15, further comprising
a step of controlling said outdoor blower in synchronism with the control of said capacity of said compressor.

18. The control method of multi-room air conditioner of claim 15, further comprising
a step of changing said target control temperature stored in each indoor unit by said model type memory means.

19. The control method of multi-room air conditioner of claim 15, further comprising
a step in which if said indoor unit selected for said control piping temperature stores the stopped state by said run/stop memory means, the target piping temperature of the indoor unit of the second highest target piping temperature is changed as the object of control.

20. The control method of multi-room air conditioner of claim 14 or 15,
wherein if at least one of said plural indoor units is in dehumidifying operation,
a control by said target piping temperature does not take effect if cooling operation is driven in other indoor unit.

21. The control method of multi-room air conditioner of claim 15,
wherein while at least one of said plural indoor units is in dehumidifying operation,
in other indoor unit, if the load constant obtained from the load constant memory means is lower than the set load constant,
even when cooling operation is done in further other indoor unit, the control piping temperature is set by the target piping temperature transmitted from each indoor unit, and
said control piping temperature is controlled at a further lower temperature than the piping temperature.

22. The control method of multi-room air conditioner of claim 15,
wherein while at least one of the plural indoor units is in dehumidifying operation,
in other indoor unit, if cooling operation is executed, and a fan speed of a indoor blower is the lowest speed,
the highest target piping temperature of the target piping temperatures sent from the indoor units is set at the control piping temperature of the object of control, and said control piping temperature is controlled at a further lower temperature than the piping temperature.

23. The control method of multi-room air conditioner of claim 15,
wherein when the target piping temperatures are sent from said plural indoor units and the control piping temperature is set and controlled,
an overheating degree control value of said motor-driven expansion valve controlling an overheating degree of said compressor is changed depending on the changes of the ambient temperature.

24. The control method of multi-room air conditioner of claim 15,
wherein when the target piping temperatures are sent from said plural indoor units and the control piping temperature is set and controlled, -
an overheating degree control value of said motor-driven expansion valve controlling the overheating degree of said compressor is changed depending on the changes of a compressor frequency.

25. The control method of multi-room air conditioner of claim 15,
wherein said each indoor unit has an indoor blower,
when the target piping temperatures are sent from said plural indoor units and the control piping temperature is set and controlled,
if one indoor unit of said plurality of indoor units stores the stopped state by said differential temperature calculating means,
the indoor blower of the stopped indoor unit is stopped for a specific time, and then intermittent operation continues.

26. The control method of multi-room air conditioner of claim 14 or 15,

wherein said steps include at least one step selected from the group consisting of:

(g) a step of detecting the room temperature Tr in each running indoor unit of said plurality of indoor units, and calculating the differential temperature ($\Delta T = Tr - Ts$) from said set room temperature (Ts),

(h) a step of controlling the opening degree of each motor-driven refrigerant distribution expansion valve on the basis of at least one signal selected from the group consisting of rated capacity signal, differential temperature signal, operation mode signal, run/stop signal, and model type signal sent from said each indoor unit,

(i) a step of setting the operation frequency of said compressor and the opening degree of said motor-driven expansion valve in the outdoor unit, on the basis of at least one signal selected from the group consisting of rated capacity signal, differential temperature signal, operation mode signal, run/stop signal, and model type signal sent from each indoor unit, and

then, a step of later comparing said set operation frequency and opening degree of said motor-driven expansion valve, and said piping temperature and control piping temperature, and controlling said operation frequency of said compressor and said opening degree of said motor-driven expansion valve, and

(j) a step of controlling said operation frequency of said compressor and said opening degree of said motor-driven expansion valve in every specific period.

**Patentansprüche**

1. Mehrraum-Klimaanlage mit:

(a) einer Freiluft-Einheit (2) mit einem regelbaren Verdichter (6), einem Freiluft-Wärmetauscher (8), einer kälteflüssigkeitsseitigen Hauptleitung (14), einer kältegasseitigen Hauptleitung (18) und einem motorbetriebenen Expansionsventil (7), wobei eine Kälteflüssigkeit in der kälteflüssigkeitsseitigen Hauptleitung strömt und ein Kältegas in der kältegasseitigen Hauptleitung strömt;

(b) einer Vielzahl von Innenraum-Einheiten (4a, 4b, 4c), die jeweils einen Innenraum-Wärmetauscher (12a, 12b, 12c) haben; und

(c) kälteflüssigkeitsseitigen Zweigrohren (16a, 16b, 16c), die von der kälteflüssigkeitsseitigen Hauptleitung abgehen, kältegasseitigen Zweigrohren (20a, 20b, 20c), die von der kältegasseitigen Hauptleitung abgehen, und motorbetriebenen Kältemittelverteilungs-Expansionsventilen (22a, 22b, 22c), die in den kälteflüssigkeitsseitigen Zweigrohren installiert sind, die zwischen der Freiluft-Einheit und der Vielzahl von Innenraum-Einheiten verlegt sind,

**dadurch gekennzeichnet,**
**dass** jede der Innenraum-Einheiten (4a, 4b, 4c) Folgendes aufweist:

Raumtemperaturfestlegungs-Speichermittel (52) zum Speichern einer festgelegten Raumtemperatur;
Raumtemperatur-Messfühlmittel (36a, 36b, 36c) zum Messen einer Raumtemperatur;
Raumfeuchte-Messfühlmittel (37a, 37b, 37c) zum Messen einer Raumfeuchte;
Leitungstemperatur-Messfühlmittel (39a, 39b, 39c) zum Messen einer Temperatur der Leitungen des Innenraum-Wärmetauschers;
Differentialtemperatur-Berechnungsmittel (50) zum Berechnen einer Differentialtemperatur der festgelegten Raumtemperatur und der Raumtemperatur aufgrund der Raumtemperaturfestlegungs-Speichermittel und der Raumtemperatur-Messfühlmittel;
Nennleistungs-Speichermittel (56) zum Speichern einer Nennleistung jeder Innenraum-Einheit;
Modell-Speichermittel (57) zum Speichern eines Modells jeder Innenraum-Einheit;
Betriebs-/Abschalt-Speichermittel (54) zum Speichern der Angabe, ob die Innenraum-Einheit im Betriebszustand oder im Abschaltzustand ist; und
Leitungssolltemperatur-Festlegmittel (55) zum Festlegen und Speichern einer Leitungssolltemperatur aufgrund einer mit den Raumtemperatur-Messfühlmitteln gemessenen Raumtemperatur und einer mit den Raumfeuchte-Messfühlmitteln gemessenen Feuchte,

**dass** die Freiluft-Einheit (2) Folgendes aufweist:

Expansionsventil-Öffnungsgrad-Steuermittel (64) zum Steuern eines Öffnungsgrades des motorbetriebenen Expansionsventils;
Verdichterfrequenz-Regelungsmittel (62) zum Regeln einer Leistung des regelbaren Verdichters und

Leitungsregeltemperatur-Festlegmittel (61) zum Festlegen der höchsten Leitungssolltemperatur der Leitungssolltemperaturen der Innenraum-Einheit als Leitungsregeltemperatur und

**dass** die Verdichterfrequenz-Regelungsmittel die Leitungsregeltemperatur mit der als Leitungsregeltemperatur verwendeten Leitungstemperatur der Innenraum-Einheit vergleichen und die Leistung des regelbaren Verdichters der Freiluft-Einheit regeln.

2.  Mehrraum-Klimaanlage nach Anspruch 1, **dadurch gekennzeichnet, dass** die Expansionsventil-Öffnungsgrad-Steuermittel die Leitungsregeltemperatur mit der als Leitungsregeltemperatur verwendeten Leitungstemperatur der Innenraum-Einheit vergleichen und den Öffnungsgrad des motorbetriebenen Expansionsventils steuern.

3.  Mehrraum-Klimaanlage nach Anspruch 1, **dadurch gekennzeichnet, dass** die Freiluft-Einheit ein Freiluft-Gebläse hat und das Freiluft-Gebläse synchron mit der Regelung der Leistung des Verdichters geregelt wird.

4.  Mehrraum-Klimaanlage nach einem der Ansprüche 1 bis 3, **dadurch gekennzeichnet, dass** die Modell-Speichermittel die in jeder Innenraum-Einheit gespeicherte Soll-Regeltemperatur ändern können.

5.  Mehrraum-Klimaanlage nach einem der Ansprüche 1 bis 3, **dadurch gekennzeichnet, dass** in dem Fall, dass die für die Leitungsregeltemperatur gewählte Innenraum-Einheit den Abschaltzustand mit den Betriebs-/Abschalt-Speichermitteln speichert, die Leitungssolltemperatur der Innenraum-Einheit mit der zweithöchsten Leitungssolltemperatur als Gegenstand der Steuerung geändert wird.

6.  Mehrraum-Klimaanlage nach einem der Ansprüche 1 bis 3, **dadurch gekennzeichnet, dass** in dem Fall, dass mindestens eine der mehreren Innenraum-Einheiten im Entfeuchtungsbetrieb ist, keine Regelung nach der Leitungssolltemperatur erfolgt, wenn eine andere Innenraum-Einheit im Kühlbetrieb arbeitet.

7.  Mehrraum-Klimaanlage nach einem der Ansprüche 1 bis 3, **dadurch gekennzeichnet, dass**, während mindestens eine der mehreren Innenraum-Einheiten im Entfeuchtungsbetrieb ist, in einer anderen Innenraum-Einheit die Leitungsregeltemperatur nach der von jeder Innenraum-Einheit gesendeten Leitungssolltemperatur festgelegt wird, wenn die von den Lastkonstanten-Speichermitteln erhaltene Lastkonstante kleiner als die festgelegte Lastkonstante ist, auch wenn eine weitere andere Innenraum-Einheit im Kühlbetrieb arbeitet, und **dass** die Leitungsregeltemperatur auf eine noch niedrigere Temperatur als die Leitungstemperatur geregelt wird.

8.  Mehrraum-Klimaanlage nach einem der Ansprüche 1 bis 3, **dadurch gekennzeichnet, dass**, während mindestens eine der mehreren Innenraum-Einheiten im Entfeuchtungsbetrieb ist, in einer anderen Innenraum-Einheit die höchste Leitungssolltemperatur der von den Innenraum-Einheiten gesendeten Leitungssolltemperaturen auf eine Leitungsregeltemperatur des Gegenstands der Steuerung festgelegt wird, wenn die andere Innenraum-Einheit im Kühlbetrieb ist und eine Drehzahl des Innenraum-Gebläses am niedrigsten ist, und **dass** die Leitungsregeltemperatur auf eine noch niedrigere Temperatur als die Leitungstemperatur geregelt wird.

9.  Mehrraum-Klimaanlage nach Anspruch 1, **dadurch gekennzeichnet, dass**, wenn die Leitungssolltemperaturen von den mehreren Innenraum-Einheiten gesendet werden und die Leitungsregeltemperatur festgelegt und geregelt wird, ein Überhitzungsgrad-Regelwert des motorbetriebenen Expansionsventils, der den Überhitzungsgrad des Verdichters regelt, in Abhängigkeit von den Änderungen einer Umgebungstemperatur geändert wird.

10. Mehrraum-Klimaanlage nach Anspruch 1, **dadurch gekennzeichnet, dass**, wenn die Leitungssolltemperaturen von den mehreren Innenraum-Einheiten gesendet werden und die Leitungsregeltemperatur festgelegt und geregelt wird, der Überhitzungsgrad-Regelwert des motorbetriebenen Expansionsventils, der den Überhitzungsgrad des Verdichters regelt, in Abhängigkeit von den Änderungen einer Verdichterfrequenz geändert wird.

11. Mehrraum-Klimaanlage nach einem der Ansprüche 1 bis 3, **dadurch gekennzeichnet, dass** jede Innenraum-Einheit ein Innenraum-Gebläse hat und **dass**, wenn die Leitungssolltemperaturen von den mehreren Innenraum-Einheiten gesendet werden und die Leitungsregeltemperatur festgelegt und geregelt wird, das Innenraum-Gebläse der abgeschalteten Innenraum-Einheit eine bestimmte Zeit lang abgeschaltet wird, wenn eine Innenraum-Einheit der mehreren Innenraum-Einheiten den Abschaltzustand mit den Differentialtemperatur-Berechnungsmitteln speichert, und dann der diskontinuierliche Betrieb weitergeht.

**12.** Mehrraum-Klimaanlage nach einem der Ansprüche 1 bis 3, **dadurch gekennzeichnet, dass** die kälteflüssigkeitsseitigen Zweigrohre (16a, 16b, 16c), die gasseitigen Zweigrohre (20a, 20b, 20c) und die motorbetriebenen Kältemittelverteilungs-Expansionsventile (22a, 22b, 22c) eine Zweig-Einheit (3) bilden und die Zweig-Einheit zwischen der Freiluft-Einheit und der Vielzahl von Innenraum-Einheiten installiert ist.

**13.** Mehrraum-Klimaanlage nach einem der Ansprüche 1 bis 3, **dadurch gekennzeichnet, dass** die kälteflüssigkeitsseitigen Zweigrohre (16a, 16b, 16c) , die gasseitigen Zweigrohre (20a, 20b, 20c) und die motorbetriebenen Kältemittelverteilungs-Expansionsventile (22a, 22b, 22c) in der Freiluft-Einheit installiert sind.

**14.** Verfahren zum Steuern einer Mehrraum-Klimaanlage mit den folgenden Schritten:

(a) Bereitstellen der Mehrraum-Klimaanlage, die eine Freiluft-Einheit (2) und eine Vielzahl von mit der Freiluft-Einheit verbundenen Innenraum-Einheiten (4a, 4b, 4c) hat;
(b) Speichern einer festgelegten Raumtemperatur;
(c) Messen einer Raumtemperatur, einer Raumfeuchte und einer Leitungstemperatur in jeder der in Betrieb befindlichen Einheiten der Vielzahl von Innenraum-Einheiten;
(d) Speichern jeder Leitungsregeltemperatur aufgrund der gemessenen Raumtemperatur und Raumfeuchte;
(e) Festlegen der höchsten Leitungsregeltemperatur der einzelnen Leitungsregeltemperaturen als Leitungsregeltemperatur und
(f) Vergleichen der Leitungsregeltemperatur mit der als Leitungsregeltemperatur verwendeten Leitungstemperatur der Innenraum-Einheit und Regeln der Leistung eines in der Freiluft-Einheit installierten regelbaren Verdichters (6).

**15.** Verfahren zum Steuern einer Mehrraum-Klimaanlage nach Anspruch 14, **dadurch gekennzeichnet, dass** die Freiluft-Einheit einen regelbaren Verdichter (6), einen Freiluft-Wärmetauscher (8), eine kälteflüssigkeitsseitige Hauptleitung (14), eine kältegasseitige Hauptleitung (18) und ein motorbetriebenes Expansionsventil (7) aufweist, jede der Vielzahl von Innenraum-Einheiten (4a, 4b, 4c) einen Innenraum-Wärmetauscher (12a, 12b, 12c) hat und die Mehrraum-Klimaanlage Folgendes aufweist: kälteflüssigkeitsseitige Zweigrohre (16a, 16b, 16c), die von der kälteflüssigkeitsseitigen Hauptleitung abgehen; kältegasseitige Zweigrohre (20a, 20b, 20c), die von der kältegasseitigen Hauptleitung abgehen; und motorbetriebene Kältemittelverteilungs-Expansionsventile (22a, 22b, 22c), die in den kälteflüssigkeitsseitigen Zweigrohren installiert sind, die zwischen der Freiluft-Einheit und der Vielzahl von Innenraum-Einheiten verlegt sind, wobei jede der Innenraum-Einheiten (4a, 4b, 4c) Folgendes aufweist:

Raumtemperaturfestlegungs-Speichermittel (52) zum Speichern einer festgelegten Raumtemperatur;
Raumtemperatur-Messfühlmittel (36a, 36b, 36c) zum Messen einer Raumtemperatur;
Raumfeuchte-Messfühlmittel (37a, 37b, 37c) zum Messen einer Raumfeuchte;
Leitungstemperatur-Messfühlmittel (39a, 39b, 39c) zum Messen einer Temperatur der Leitungen des Innenraum-Wärmetauschers;
Differentialtemperatur-Berechnungsmittel (50) zum Berechnen einer Differentialtemperatur der festgelegten Raumtemperatur und der Raumtemperatur aufgrund der Raumtemperaturfestlegungs-Speichermittel und der Raumtemperatur-Messfühlmittel;
Nennleistungs-Speichermittel (56) zum Speichern einer Nennleistung jeder Innenraum-Einheit;
Modell-Speichermittel (57) zum Speichern eines Modells jeder Innenraum-Einheit;
Betriebs-/Abschalt-Speichermittel (54) zum Speichern der Angabe, ob die einzelnen Innenraum-Einheiten im Betriebszustand oder im Abschaltzustand sind;
Leitungssolltemperatur-Festlegmittel (55) zum Festlegen und Speichern einer Leitungssolltemperatur aufgrund der mit den Raumtemperatur-Messfühlmitteln gemessenen Raumtemperatur und der mit den Raumfeuchte-Messfühlmitteln gemessenen Feuchte;
Expansionsventil-Öffnungsgrad-Steuermittel (64) zum Steuern eines Öffnungsgrades des motorbetriebenen Expansionsventils;
Verdichterfrequenz-Regelungsmittel (62) zum Regeln einer Leistung des regelbaren Verdichters und
Leitungsregeltemperatur-Festlegmittel (84) zum Festlegen der höchsten Leitungssolltemperatur der Leitungssolltemperaturen der Innenraum-Einheiten als Leitungsregeltemperatur.

**16.** Verfahren zum Steuern einer Mehrraum-Klimaanlage nach Anspruch 15, **dadurch gekennzeichnet, dass** der Schritt (f) einen Schritt des Vergleichens der Leitungsregeltemperatur mit der als Leitungsregeltemperatur verwendeten Leitungstemperatur der Innenraum-Einheit und des Steuerns des Öffnungsgrades des motorbetriebenen Expansionsventils umfasst.

17. Verfahren zum Steuern einer Mehrraum-Klimaanlage nach Anspruch 14 oder 15, das weiterhin einen Schritt des Steuerns des Freiluft-Gebläses synchron mit der Regelung der Leistung des Verdichters aufweist.

18. Verfahren zum Steuern einer Mehrraum-Klimaanlage nach Anspruch 15, das weiterhin einen Schritt des Änderns der Soll-Regeltemperatur, die in jeder Innenraum-Einheit mit den Modell-Speichermitteln gespeichert wird, aufweist.

19. Verfahren zum Steuern einer Mehrraum-Klimaanlage nach Anspruch 15, das weiterhin einen Schritt aufweist, in dem die Leitungssolltemperatur der Innenraum-Einheit mit der zweithöchsten Leitungssolltemperatur als Gegenstand der Steuerung geändert wird, wenn die für die Leitungsregeltemperatur gewählte Innenraum-Einheit den Abschaltzustand mit den Betriebs-/Abschalt-Speichermitteln speichert.

20. Verfahren zum Steuern einer Mehrraum-Klimaanlage nach Anspruch 14 oder 15, **dadurch gekennzeichnet, dass** in dem Fall, dass mindestens eine der mehreren Innenraum-Einheiten im Entfeuchtungsbetrieb ist, keine Regelung nach der Leitungssolltemperatur erfolgt, wenn eine andere Innenraum-Einheit im Kühlbetrieb arbeitet.

21. Verfahren zum Steuern einer Mehrraum-Klimaanlage nach Anspruch 15, **dadurch gekennzeichnet, dass**, während mindestens eine der mehreren Innenraum-Einheiten im Entfeuchtungsbetrieb ist, in einer anderen Innenraum-Einheit die Leitungsregeltemperatur nach der von jeder Innenraum-Einheit gesendeten Leitungssolltemperatur festgelegt wird, wenn die von den Lastkonstanten-Speichermitteln erhaltene Lastkonstante niedriger als die festgelegte Lastkonstante ist, auch wenn eine weitere andere Innenraum-Einheit im Kühlbetrieb ist, und **dass** die Leitungsregeltemperatur auf eine noch niedrigere Temperatur als die Leitungstemperatur geregelt wird.

22. Verfahren zum Steuern einer Mehrraum-Klimaanlage nach Anspruch 15, **dadurch gekennzeichnet, dass**, während mindestens eine der mehreren Innenraum-Einheiten im Entfeuchtungsbetrieb ist, in einer anderen Innenraum-Einheit die höchste Leitungssolltemperatur der von den Innenraum-Einheiten gesendeten Leitungssolltemperaturen als Leitungsregeltemperatur des Gegenstands der Regelung festgelegt wird, wenn die andere Innenraum-Einheit im Kühlbetrieb arbeitet und eine Drehzahl des Innenraum-Gebläses am niedrigsten ist, und dass die Leitungsregeltemperatur auf eine noch niedrigere Temperatur als die Leitungstemperatur geregelt wird.

23. Verfahren zum Steuern einer Mehrraum-Klimaanlage nach Anspruch 15, **dadurch gekennzeichnet, dass**, wenn die Leitungssolltemperaturen von den mehreren Innenraum-Einheiten gesendet werden und die Leitungsregeltemperatur festgelegt und geregelt wird, ein Überhitzungsgrad-Regelwert des motorbetriebenen Expansionsventils, der einen Überhitzungsgrad des Verdichters regelt, in Abhängigkeit von den Änderungen der Umgebungstemperatur geändert wird.

24. Verfahren zum Steuern einer Mehrraum-Klimaanlage nach Anspruch 15, **dadurch gekennzeichnet, dass**, wenn die Leitungssolltemperaturen von den mehreren Innenraum-Einheiten gesendet werden und die Leitungsregeltemperatur festgelegt und geregelt wird, ein Überhitzungsgrad-Regelwert des motorbetriebenen Expansionsventils, der den Überhitzungsgrad des Verdichters regelt, in Abhängigkeit von den Änderungen einer Verdichterfrequenz geändert wird.

25. Verfahren zum Steuern einer Mehrraum-Klimaanlage nach Anspruch 15, **dadurch gekennzeichnet, dass** jede Innenraum-Einheit ein Innenraum-Gebläse hat und **dass**, wenn die Leitungssolltemperaturen von den mehreren Innenraum-Einheiten gesendet werden und die Leitungsregeltemperatur festgelegt und geregelt wird, das Innenraum-Gebläse der abgeschalteten Innenraum-Einheit eine bestimmte Zeit lang abgeschaltet wird, wenn eine Innenraum-Einheit der mehreren Innenraum-Einheiten den Abschaltzustand mit den Differentialtemperatur-Berechnungsmitteln speichert, und dann der diskontinuierliche Betrieb weitergeht.

26. Verfahren zum Steuern einer Mehrraum-Klimaanlage nach Anspruch 14 oder 15, **dadurch gekennzeichnet, dass** die Schritte mindestens einen der folgenden Schritte umfassen:

(g) einen Schritt des Messens der Raumtemperatur Tr in jeder in Betrieb befindlichen Innenraum-Einheit der Vielzahl von Innenraum-Einheiten und des Berechnens der Differentialtemperatur ($\Delta T = Tr - Ts$) aus der festgelegten Raumtemperatur Ts,
(h) einen Schritt des Steuerns des Öffnungsgrads jedes motorbetriebenen Kältemittelverteilungs-Expansionsventils aufgrund mindestens eines Signals aus der Gruppe Nennleistungssignal, Differentialtemperatur-Signal, Betriebsart-Signal, Betriebs-/Abschaltsignal und Modell-Signal, die von jeder Innenraum-Einheit gesendet werden,

(i) einen Schritt des Festlegens der Betriebsfrequenz des Verdichters und des Öffnungsgrades des motorbetriebenen Expansionsventils in der Freiluft-Einheit aufgrund mindestens eines Signals aus der Gruppe Nennleistungssignal, Differentialtemperatur-Signal, Betriebsart-Signal, Betriebs-/Abschaltsignal und Modell-Signal, die von jeder Innenraum-Einheit gesendet werden, und anschließend einen Schritt des späteren Vergleichens der festgelegten Betriebsfrequenz und des festgelegten Öffnungsgrades des motorbetriebenen Expansionsventils sowie der Leitungstemperatur und der Leitungsregeltemperatur und des Regelns der Betriebsfrequenz des Verdichters und des Öffnungsgrades des motorbetriebenen Expansionsventils und

(j) einen Schritt des Regelns der Betriebsfrequenz des Verdichters und des Öffnungsgrades des motorbetriebenen Expansionsventils in jedem bestimmten Zeitraum.

## Revendications

1. Conditionneur d'air pour plusieurs locaux comprenant :

(a) une unité extérieure (2) comprenant un compresseur à cylindrée variable (6), un échangeur de chaleur extérieur (8), un tuyau principal du côté liquide réfrigérant (14), un tuyau principal du côté gaz réfrigérant (18) et une vanne de détente entraînée par un moteur (7),
un liquide réfrigérant circulant dans ledit tuyau principal du côté liquide réfrigérant, et
un gaz réfrigérant circulant dans ledit tuyau principal du côté gaz réfrigérant,
(b) une pluralité d'unités intérieures (4a, 4b, 4c),
chacune de ladite pluralité d'unités intérieures comportant un échangeur de chaleur intérieur (12a, 12b, 12c), et
(c) des tuyaux de dérivation du côté liquide réfrigérant (16a, 16b, 16c) ramifiés depuis ledit tuyau principal du côté liquide réfrigérant et des tuyaux de dérivation du côté gaz réfrigérant (20a, 20b, 20c) ramifiés depuis ledit tuyau principal du côté gaz réfrigérant et des vannes de détente de distribution de réfrigérant entraînées par des moteurs (22a, 22b, 22c) installées dans lesdits tuyaux ramifiés du côté liquide réfrigérant, installés entre ladite unité extérieure et ladite pluralité d'unités intérieures,

où chacune desdites unités intérieures (4a, 4b, 4c) comprend :

un moyen de mémoire d'établissement de température de local (52) destiné à mémoriser une température de consigne de local,
un moyen de détection de température de local (36a, 36b, 36c) destiné à détecter une température de local,
un moyen de détection d'humidité de local (37a, 37b, 37c) destiné à détecter une humidité de local,
un moyen de détection de température de tuyauterie (39a, 39b, 39c) destiné à détecter une température de tuyauterie dudit échangeur de chaleur intérieur,
un moyen de calcul de différence de température (50) destiné à calculer une différence de température de ladite température de consigne de local et de ladite température de local sur la base dudit moyen de mémoire d'établissement de température de local et dudit moyen de détection de température de local,
un moyen de mémoire de capacité nominale (56) destiné à mémoriser une capacité nominale de chaque dite unité intérieure,
un moyen de mémoire de type de modèle (57) destiné à mémoriser un type de modèle de chaque dite unité intérieure,
un moyen de mémoire de marche/arrêt (54) destiné à mémoriser si chaque dite unité intérieure est dans un état de fonctionnement ou dans un état arrêté,
un moyen d'établissement de température de tuyauterie cible (55) destiné à établir et mémoriser une température de tuyauterie cible sur la base d'une température de local détectée par ledit moyen de détection de température de local et d'une humidité détectée par ledit moyen de détection d'humidité de local,

et où l'unité extérieure (2) comprend :

un moyen d'action sur le degré d'ouverture de vanne de détente (64) destiné à commander un degré d'ouverture de ladite vanne de détente entraînée par un moteur,
un moyen d'action sur la fréquence du compresseur (62) destiné à commander la cylindrée dudit compresseur à cylindrée variable, et

un moyen d'établissement de température de tuyauterie de commande (61) destiné à établir la température de tuyauterie cible la plus haute desdites températures de tuyauteries cibles de ladite unité intérieure en tant que température de tuyauterie de commande, et

où ledit moyen d'action sur la fréquence du compresseur compare ladite température de tuyauterie de commande et ladite température de tuyauterie de ladite unité intérieure adoptée en tant que ladite température de tuyauterie de commande, et commande la cylindrée dudit compresseur à cylindrée variable de ladite unité extérieure.

2. Conditionneur d'air pour plusieurs locaux selon la revendication 1,
dans lequel ledit moyen d'action sur le degré d'ouverture de la vanne de détente compare ladite température de tuyauterie de commande et ladite température de tuyauterie de ladite unité intérieure adoptée en tant que ladite température de tuyauterie de commande, et commande le degré d'ouverture de ladite vanne de détente entraînée par un moteur.

3. Conditionneur d'air pour plusieurs locaux selon la revendication 1,
dans lequel ladite unité extérieure comporte une soufflante extérieure, et
ladite soufflante extérieure est commandée en synchronisme avec la commande de ladite cylindrée dudit compresseur.

4. Conditionneur d'air pour plusieurs locaux selon l'une quelconque des revendications 1 à 3,
dans lequel ledit moyen de mémoire de type de modèle peut modifier ladite température de commande cible mémorisée dans chaque dite unité intérieure.

5. Conditionneur d'air pour plusieurs locaux selon l'une quelconque des revendications 1 à 3,
dans lequel, si ladite unité intérieure sélectionnée pour ladite température de tuyauterie de commande mémorise l'état arrêté par le biais dudit moyen de mémoire de marche/arrêt, la température de tuyauterie cible de l'unité intérieure de la seconde température de tuyauterie cible la plus haute est modifiée en tant que l'objet de la commande.

6. Conditionneur d'air pour plusieurs locaux selon l'une quelconque des revendications 1 à 3, dans lequel, si au moins l'une desdites plusieurs unités intérieures est dans une opération de déshumidification, une commande par la température de tuyauterie cible ne prend pas effet si une opération de refroidissement est ordonnée dans une autre unité intérieure.

7. Conditionneur d'air pour plusieurs locaux selon l'une quelconque des revendications 1 à 3,
dans lequel, alors qu'au moins l'une desdites plusieurs unités intérieures est dans une opération de déshumidification, dans l'autre unité intérieure, si la constante de charge obtenue depuis le moyen de mémoire de constante de charge est inférieure à la constante de charge de consigne,
même lorsqu'une opération de refroidissement est faite dans encore une autre unité intérieure, la température de tuyauterie de commande est établie par la température de tuyauterie cible transmise depuis chaque unité intérieure, et ladite température de tuyauterie de commande est commandée à une température encore plus basse que la température de tuyauterie.

8. Conditionneur d'air pour plusieurs locaux selon l'une quelconque des revendications 1 à 3,
dans lequel, alors qu'au moins l'une desdites plusieurs unités intérieures est dans une opération de déshumidification, dans une autre unité intérieure, si l'opération de refroidissement est exécutée et qu'une vitesse de ventilateur d'une soufflante intérieure est la vitesse la plus basse,
la température de tuyauterie cible la plus haute parmi les températures de tuyauteries cibles envoyées depuis les unités intérieures est établie à une température de tuyauterie de commande de l'objet de la commande, et ladite température de tuyauterie de commande est commandée à une température encore plus basse que la température de tuyauterie.

9. Conditionneur d'air pour plusieurs locaux selon la revendication 1,
dans lequel, lorsque les températures de tuyauteries cibles sont envoyées depuis lesdites plusieurs unités intérieures et que la température de tuyauterie de commande est établie et commandée,
une valeur de commande de degré de surchauffe de la vanne de détente entraînée par un moteur commandant le degré de surchauffe dudit compresseur est modifiée en fonction des variations de la température ambiante.

10. Conditionneur d'air pour plusieurs locaux selon la revendication 1,

dans lequel, lorsque les températures de tuyauteries cibles sont envoyées depuis lesdites plusieurs unités intérieures et que la température de tuyauterie de commande est établie et commandée, la valeur de commande de degré de surchauffe de ladite vanne de détente entraînée par un moteur commandant le degré de surchauffe dudit compresseur est modifiée en fonction des variations d'une fréquence de compresseur.

11. Conditionneur d'air pour plusieurs locaux selon l'une quelconque des revendications 1 à 3,
dans lequel chaque dite unité intérieure comporte une soufflante intérieure,
lorsque les températures de tuyauteries cibles sont envoyées depuis lesdites plusieurs unités intérieures et que la température de tuyauterie de commande est établie et commandée,
si une unité intérieure parmi lesdites plusieurs unités intérieures mémorise l'état arrêté par ledit moyen de calcul de différence de température,
la soufflante intérieure de l'unité intérieure arrêtée est arrêtée pendant un temps spécifique, et ensuite un fonctionnement intermittent se poursuit.

12. Conditionneur d'air pour plusieurs locaux selon l'une quelconque des revendications 1 à 3,
dans lequel lesdits tuyaux de dérivation du côté liquide réfrigérant (16a, 16b, 16c), lesdits tuyaux de dérivation du côté gaz (20a, 20b, 20c), et lesdites vannes de détente de distribution de réfrigérant entraînées par des moteurs (22a, 22b, 22c) composent une unité de dérivation (3), et
ladite unité de dérivation est installée entre ladite unité extérieure et ladite pluralité d'unités intérieures.

13. Conditionneur d'air pour plusieurs locaux selon l'une quelconque des revendications 1 à 3,
dans lequel lesdits tuyaux de dérivation du côté liquide réfrigérant (16a, 16b, 16c), lesdits tuyaux de dérivation du côté gaz (20a, 20b, 20c), et lesdites vannes de détente de distribution de réfrigérant entraînées par des moteurs (22a, 22b, 22c) sont installés dans ladite unité extérieure.

14. Procédé de commande d'un conditionneur d'air pour plusieurs locaux, comprenant les étapes consistant à :

(a) fournir ledit conditionneur d'air pour plusieurs locaux,
ledit conditionneur d'air pour plusieurs locaux comprenant une unité extérieure (2) et une pluralité d'unités intérieures (4a, 4b, 4c) reliées à ladite unité extérieure,
(b) mémoriser une température de consigne de local,
(c) détecter une température de local, une humidité de local et une température de tuyauterie dans chacune des unités en fonctionnement parmi ladite pluralité d'unités intérieures,
(d) mémoriser chaque température de commande de tuyauterie sur la base de ladite température de local et de ladite humidité de local détectées,
(e) établir la température de commande de tuyauterie la plus haute parmi lesdites températures de commande de tuyauteries individuelles en tant que température de tuyauterie de commande, et
(f) comparer ladite température de tuyauterie de commande et ladite température de tuyauterie de l'unité intérieure adoptée en tant que dite température de tuyauterie de commande, et commander la cylindrée d'un compresseur à cylindrée variable (6) installé dans ladite unité extérieure.

15. Procédé de commande d'un conditionneur d'air pour plusieurs locaux selon la revendication 14,
dans lequel ladite unité extérieure comprend un compresseur à cylindrée variable (6), un échangeur de chaleur extérieur (8), un tuyau principal du côté liquide réfrigérant (14), un tuyau principal du côté gaz réfrigérant (18), et une vanne de détente entraînée par un moteur (7),
chacune de ladite pluralité d'unités intérieures (4a, 4b, 4c) comporte un échangeur de chaleur intérieur (12a, 12b, 12c),
ledit conditionneur d'air pour plusieurs locaux comprend des tuyaux de dérivation du côté liquide réfrigérant (16a, 16b, 16c) ramifiés à partir dudit tuyau principal du côté liquide réfrigérant, des tuyaux ramifiés du côté gaz réfrigérant (20a, 20b, 20c) ramifiés à partir dudit tuyau principal du côté gaz réfrigérant, et des vannes de détente de distribution de réfrigérant entraînées par des moteurs (22a, 22b, 22c), installées dans lesdits tuyaux de dérivation du côté liquide réfrigérant, installés entre ladite unité extérieure et ladite pluralité d'unités intérieures,
chacune desdites unités intérieures (4a, 4b, 4c) comprenant :

un moyen de mémoire d'établissement de température de local (52) destiné à mémoriser une température de consigne de local,
un moyen de détection de température de local (36a, 36b, 36c) destiné à détecter une température de local,
un moyen de détection d'humidité de local (37a, 37b, 37c) destiné à détecter une humidité de local,

un moyen de détection de température de tuyauterie (39a, 39b, 39c) destiné à détecter une température de tuyauterie dudit échangeur de chaleur intérieur,

un moyen de calcul de différence de température (50) destiné à calculer une différence de température de ladite température de consigne de local et de ladite température de local sur la base dudit moyen de mémoire d'établissement de température de local et dudit moyen de détection de température de local,

un moyen de mémoire de capacité nominale (56) destiné à mémoriser une capacité nominale de chaque dite unité intérieure,

un moyen de mémoire de type de modèle (57) destiné à mémoriser un type de modèle de chaque dite unité intérieure,

un moyen de mémoire de marche/arrêt (54) destiné à mémoriser si chaque dite unité intérieure est dans un état de fonctionnement ou un état arrêté,

un moyen d'établissement de température de tuyauterie cible (55) destiné à établir et mémoriser une température de tuyauterie cible sur la base de la température de local détectée par ledit moyen de détection de température de local et de l'humidité détectée par ledit moyen de détection d'humidité de local,

un moyen de calcul de degré d'ouverture de vanne de détente (64) destiné à commander un degré d'ouverture de ladite vanne de détente entraînée par un moteur,

un moyen d'action sur la fréquence du compresseur (62) destiné à commander la cylindrée dudit compresseur à cylindrée variable, et

un moyen d'établissement de température de tuyauterie de commande (84) destiné à établir la température de tuyauterie cible la plus élevée desdites températures de tuyauteries cibles des unités intérieures en tant que température de tuyauterie de commande.

16. Procédé de commande d'un conditionneur d'air pour plusieurs locaux selon la revendication 15,
dans lequel ladite étape (f) comprend une étape consistant à comparer ladite température de tuyauterie de commande, et ladite température de tuyauterie de ladite unité intérieure adoptée en tant que ladite température de tuyauterie de commande, et à commander le degré d'ouverture de ladite vanne de détente entraînée par un moteur.

17. Procédé de commande d'un conditionneur d'air pour plusieurs locaux selon la revendication 14 ou 15, comprenant en outre
une étape consistant à commander ladite soufflante extérieure en synchronisme avec la commande de ladite cylindrée dudit compresseur.

18. Procédé de commande d'un conditionneur d'air pour plusieurs locaux selon la revendication 15, comprenant en outre une étape consistant à modifier ladite température de commande cible mémorisée dans chaque unité intérieure par le biais dudit moyen de mémoire de type de modèle.

19. Procédé de commande du conditionneur d'air pour plusieurs locaux selon la revendication 15, comprenant en outre une étape dans laquelle, si ladite unité intérieure sélectionnée pour ladite température de tuyauterie de commande mémorise l'état arrêté par ledit moyen de mémoire de marche/arrêt, la température de tuyauterie cible de l'unité intérieure de la seconde température de tuyauterie cible la plus haute est modifiée en tant que l'objet de la commande.

20. Procédé de commande d'un conditionneur d'air pour plusieurs locaux selon la revendication 14 ou 15,
dans lequel, si au moins l'une desdites plusieurs unités intérieures est dans une opération de déshumidification, une commande par le biais de ladite température de tuyauterie cible ne prend pas effet si une opération de refroidissement est commandée dans une autre unité intérieure.

21. Procédé de commande d'un conditionneur d'air pour plusieurs locaux selon la revendication 15,
dans lequel, alors qu'au moins l'une desdites plusieurs unités intérieures est dans une opération de déshumidification, dans une autre unité intérieure, si la constante de charge obtenue à partir du moyen de mémoire de constante de charge est inférieure à la constante de charge de consigne,
même lorsqu'une opération de refroidissement est effectuée dans encore une autre unité intérieure, la température de tuyauterie de commande est établie par la température de tuyauterie cible transmise depuis chaque unité intérieure, et
ladite température de tuyauterie de commande est commandée à une température encore plus basse que la température de tuyauterie.

22. Procédé de commande d'un conditionneur d'air pour plusieurs locaux selon la revendication 15,
dans lequel, alors qu'au moins l'une des plusieurs unités intérieures est dans une opération de déshumidification,

dans une autre unité intérieure, si une opération de refroidissement est exécutée, et qu'une vitesse de ventilateur d'une soufflante intérieure est la vitesse la plus basse,

la température de tuyauterie cible la plus haute parmi les températures de tuyauteries cibles envoyées depuis les unités intérieures est établie à la température de tuyauterie de commande de l'objet de la commande, et ladite température de tuyauterie de commande est commandée à une température encore plus basse que la température de tuyauterie.

**23.** Procédé de commande d'un conditionneur d'air pour plusieurs locaux selon la revendication 15,

dans lequel, lorsque les températures de tuyauteries cibles sont envoyées depuis lesdites plusieurs unités intérieures et que la température de tuyauterie de commande est établie et commandée,

une valeur de commande de degré de surchauffe de ladite vanne de détente entraînée par un moteur commandant un degré de surchauffe dudit compresseur est modifiée en fonction des variations de la température ambiante.

**24.** Procédé de commande d'un conditionneur d'air pour plusieurs locaux selon la revendication 15,

dans lequel, lorsque les températures de tuyauteries cibles sont envoyées depuis lesdites plusieurs unités intérieures et que la température de tuyauterie de commande est établie et commandée,

une valeur de commande de degré de surchauffe de ladite vanne de détente entraînée par un moteur commandant le degré de surchauffe dudit compresseur est modifiée en fonction des variations de la fréquence du compresseur.

**25.** Procédé de commande d'un conditionneur d'air pour plusieurs locaux selon la revendication 15,

dans lequel chaque dite unité intérieure comporte une soufflante intérieure,

lorsque les températures de tuyauteries cibles sont envoyées depuis lesdites plusieurs unités intérieures et que la température de tuyauterie de commande est établie et commandée,

si une unité intérieure de ladite pluralité d'unités intérieures mémorise l'état arrêté par ledit moyen de calcul de différence de température,

la soufflante intérieure de l'unité intérieure arrêtée est arrêtée pendant un temps spécifique, et ensuite un fonctionnement intermittent se poursuit.

**26.** Procédé de commande d'un conditionneur d'air pour plusieurs locaux selon la revendication 14 ou 15,

dans lequel lesdites étapes comprennent au moins une étape sélectionnée à partir du groupe constitué de :

(g) une étape consistant à détecter la température de local Tr dans chaque unité intérieure en fonctionnement de ladite pluralité d'unités intérieures, et à calculer la différence de température ($\Delta T = Tr - Ts$) par rapport à ladite température de consigne de local (Ts),

(h) une étape consistant à commander le degré d'ouverture de chaque vanne de détente de distribution de réfrigérant entraînée par un moteur sur la base d'au moins un signal sélectionné parmi le groupe constitué d'un signal de capacité nominale, d'un signal de différence de température, d'un signal de mode de fonctionnement, d'un signal de marche/arrêt, et d'un signal de type de modèle envoyés depuis chaque dite unité intérieure,

(i) une étape consistant à établir la fréquence de fonctionnement dudit compresseur et le degré d'ouverture de ladite vanne de détente entraînée par un moteur dans l'unité extérieure, sur la base d'au moins un signal sélectionné parmi le groupe constitué d'un signal de capacité nominale, d'un signal de différence de température, d'un signal de mode de fonctionnement, d'un signal de marche/arrêt, et d'un signal de type de modèle envoyés depuis chaque unité intérieure, et

ensuite, une étape consistant à comparer ultérieurement ladite fréquence de consigne de fonctionnement et ledit degré d'ouverture de ladite vanne de détente entraînée par un moteur, et ladite température de tuyauterie et ladite température de tuyauterie de commande, et à commander ladite fréquence de fonctionnement dudit compresseur et ledit degré d'ouverture de ladite vanne de détente entraînée par un moteur, et

(j) une étape consistant à commander ladite fréquence de fonctionnement dudit compresseur et ledit degré d'ouverture de ladite vanne de détente entraînée par un moteur au cours de chaque période spécifique.

Fig. 1

EP 1 091 178 B1

Fig. 2

EP 1 091 178 B1

Fig. 3

Fig. 4

Fig. 5

Fig. 6

$\triangle T$ = Room temperature - set temperature
(Tr) (Ts)

| | Frequency No. | |
|---|---|---|
| | Cooling, drying | Heating |
| $\triangle T$ | 7 | 0 |
| +1.5 | 6 | 1 |
| +1.0 | 5 | 2 |
| +0.5 | 4 | 3 |
| +0.0 | 3 | 4 |
| −0.5 | 2 | 5 |
| −1.0 | 1 | 6 |
| −1.5 | 0 | 7 |

## Fig. 7

$$Hz = A \times (Ln1 + Ln2 + Ln3)$$

Indoor unit load factor : $Ln1, Ln2, Ln3$

Constant : $A$

Sum of load constants of running indoor units

Fig. 8

Tr: Room temperature

Ts: Set temperature set for operation

$\Delta T = Tr - Ts$

Thermo-regulation OFF region

Thermo-regulation OFFi region

EP 1 091 178 B1

Fig. 9

Fig. 10

| Condition | Ordinary |
|---|---|
| **Wind direction automatic** | Upper limit<br><br>Swing<br><br>Lower limit |
| **Wind direction setting** | Upper limit<br><br>5 stages<br><br>Lower limit |

Cooling, dehumidifying (cooling region)

Fig. 11

| Condition | | Dry region 1 | Dry region 2 (breeze dry) | Dry region 2 (windless dry) |
|---|---|---|---|---|
| Dehumidifying | Wind direction automatic | Horizontal | Downward | Diffuser closed |
| | Wind direction setting | Upper limit / Lower limit | Downward | (arrow) |
| Air flow rate | | Breeze | Breeze | Breeze |

EP 1 091 178 B1

Fig. 12

1 ) Wall-mount type

Fig. 13

Windless condition
established

S21

Piping temperature <A-3

YES

S22

Ends immediately

NO

S23

Piping temperature <A-2

YES

S24

Ends in 30 min

NO

S25

Ends in 60 min

Fig. 14

```
                    ┌─────────────────────────┐
                    │ Setting of control piping│
                    │ temperature             │
                    └─────────────────────────┘
                                  │
         S52                      ▼
          ┌──────────────────────────────────────┐
          │ Receiving target piping temperature   │
          │ Tb of indoor unit 2                   │
          └──────────────────────────────────────┘
  S51                                              S53
   ┌──────────────────────────────┐   ┌──────────────────────────────────┐
   │ Receiving target piping       │   │ Receiving target piping temperature│
   │ temperature Ta of indoor unit 1│  │ Tc of indoor unit 1              │
   └──────────────────────────────┘   └──────────────────────────────────┘

      S54                ◇ Ta>Tb ◇  ──── NO ────┐
                            │ YES               │
      S55    ◇ Ta>Tc ◇ ── NO NO ──  ◇ Tb>Tc ◇  S56
              │ YES                      │ YES
      S57   ┌──────┐   S58 ┌──────┐   ┌──────┐  S59
            │ Ta   │       │ Tc   │   │ Tb   │
            │setting│      │setting│  │setting│
            └──────┘       └──────┘   └──────┘
      S60   ┌───────────────────────────┐
            │ Transmitting control piping│
            │ temperature to outdoor unit│
            └───────────────────────────┘

      S61          ◇ Passing T0? ◇ ── NO
                        │ YES
```

44

Fig. 15

```
                    ┌──────────────────────────┐
                    │ Setting of control piping│
                    │ temperature              │
                    └──────────────────────────┘
                                  │
                                  ▼
        S52              ┌────────────────────────────────┐
                         │ Receiving target piping        │
                         │ temperature                    │
                         │ Tb of indoor unit 2            │
                         └────────────────────────────────┘
   S51                                    │                              S53
┌────────────────────────────┐           │         ┌────────────────────────────────┐
│ Receiving target piping    │           │         │ Receiving target piping        │
│ temperature                │           │         │ temperature                    │
│ Ta of indoor unit 1        │           │         │ Tc of indoor unit 1            │
└────────────────────────────┘           │         └────────────────────────────────┘
                                          ▼
      S54                          ╱ Ta>Tb ╲         NO
                                   ╲        ╱─────────────┐
                                     YES                  │
                                      │                   │
      S55                             ▼        NO NO       ▼        S56
                              ╱ Ta>Tc ╲──────┐   ┌──────╱ Tb>Tc ╲
                              ╲        ╱      │   │      ╲        ╱
                                YES           │   │        YES
                                 │            │   │         │
   S57          S58              ▼            ▼   ▼         ▼          S59
              ┌──────┐      ┌──────┐       ┌──────┐      ┌──────┐
              │ Ta   │      │ Tc   │       │ Tc   │      │ Tb   │
              │setting│     │setting│      │setting│     │setting│
              └──────┘      └──────┘       └──────┘      └──────┘
                              │                            │
                              └────────────┬───────────────┘
                                           ▼
      S61                           ╱ Passing T0? ╲    NO
                                    ╲             ╱──────┐
                                       YES
```

Fig. 16

A: Control piping temperature

```
                    ┌─────────────────────┐
                    │ Compressor frequency│
                    │       control       │
                    └─────────┬───────────┘
      S41                     │
         ╲      ┌─────────────▼───────────┐
          ╲     │  Setting of control piping│
                │       temperature A       │
                └─────────────┬───────────┘
                              │
      S42                     ▼                        S43
         ╲         ╱─────────────────────╲    YES         ╲   ┌──────────────┐
          ╲───── ╱  Piping temperature >A+1  ╲──────────────► │  Rise of 1 Hz│
                ╲                           ╱                  └──────┬───────┘
                 ╲─────────────────────────╱                         │
                              │ NO                                    │
      S45                     ▼                    S44                ▼
         ╲        ╱─────────────────────╲             ╲      ╱─────────────────╲  YES
  YES     ╲───── ╱ Piping temperature >A-1 ╲           ╲──── ╱  Rise of Hz < 5?  ╲────
   ──────────── ╲                         ╱                 ╲                   ╱
                 ╲───────────────────────╱                   ╲─────────────────╱
                              │ NO                                   │ NO
      S46                     ▼
         ╲        ┌─────────────────────┐
          ╲       │   Decrease of 1 Hz  │
                  └──────────┬──────────┘
      S47                    ▼
         ╲       ╱─────────────────────╲
          ╲──── ╱  Decrease of Hz < 5?   ╲──────
               ╲                         ╱
                ╲───────────────────────╱
                              │
      S48                     ▼
         ╲       ┌─────────────────────┐
          ╲      │        Lock         │
                 └─────────────────────┘
```

Fig. 17

Fig. 18 (a)

Cold wind

Cold air

4

Fig. 18 (b)

4

Cold air

Fig. 18 (c)

4

Fig. 19 (a)

Dry

Temperature difference 7K in 61% of area at 25℃ or less

Fig. 19 (b)

Temperature difference 3K in 23% of area at 25℃ or less

Fig. 19 (c)

Wind direction closed

Temperature difference 3K in 10% of area at 25℃

Fig. 20

A : Control piping temperature

S31

```
        ┌─────────────────────┐
        │  Expansion valve    │
        │     control         │
        └─────────────────────┘
                  │
                  ▼
    ┌───────────────────────────────────────┐
    │ Setting of control piping temperature A│
    └───────────────────────────────────────┘
                  │
                  ▼
```

S32
S33

Piping temperature >A+1    YES →    4 pulses closed

NO

S36
S34

YES    Piping temperature >A-1         Opening degree ≥60    YES

NO                                     NO

S37                                    S35

8 pulses opened                        Opening degree=60

S38

Lock

## Fig. 21 (a)

Ta, Tb: Control piping temperature

Transmission of target piping temperature in all rooms by operating all indoor units

Indoor unit 4a

Indoor unit 4b

Indoor unit 4c

Dehumidifying (dry)  Ta

Dehumidifying (dry)  Tb

Tc  Dehumidifying (dry)

Branch unit 3

Ta

Ta>Tb>Tc

Outdoor unit 2

## Fig. 21 (b)

Operating in 2 rooms

Indoor unit 4a

Indoor unit 4b

Indoor unit 4c

Stop (OFF)

Dehumidifying (dry)  Tb

Tc  Dehumidifying (dry)

Branch unit 3

Tb

Outdoor unit 2

## Fig. 22 (a)

Ta, Tb:   Control piping
_temperature_

Indoor unit 4a          Indoor unit 4b          Indoor unit 4c

Dehumidifying          Dehumidifying                    Dehumidifying
(dry)        Ta         (dry)         Tb        Tc    (dry)

Branch unit 3

Ta

Ta>Tb>Tc

Outdoor unit 2

## Fig. 22 (b)

Indoor unit 4a          Indoor unit 4b          Indoor unit 4c

Cooling         Dehumidifying      Tb              Tc    Dehumidifying

Branch unit 3

Control piping temperature is not set

Outdoor unit 2

Fig. 23 (a)

tn:         Temperature shift constant
Ta, Ta-tn: Control piping temperature

Indoor unit 4a        Indoor unit 4b        Indoor unit 4c

Dehumidifying        Dehumidifying                    Dehumidifying
(dry)        $Ta$        (dry)   $Tb$                $Tc$  (dry)

Branch unit 3

$Ta$

$Ta > Tb > Tc$        Outdoor unit 2

Fig. 23 (b)

indoor unit 4a        indoor unit 4b        indoor unit 4c

Dehumidifying  $Ta$        Dehumidifying  $Tb$        Cooling or cooling region
(dry)                                                 in dehumidifying operation

$Ln2$

Branch unit 3

$Ta-tn$

$Ta > Tb$        Outdoor unit 2

## Fig. 24 (a)

tn:  Temperature shift constant
Ta, Ta-tn: Control piping temperature

Indoor unit 4a    Indoor unit 4b    Indoor unit 4c

Dehumidifying (dry)  Ta    Dehumidifying (dry)  Tb    Tc  Dehumidifying (dry)

Branch unit 3

Ta

Ta>Tb>Tc    Outdoor unit 2

## Fig. 24 (b)

Indoor unit 4a    Indoor unit 4b    Indoor unit 4c

Dehumidifying (dry) Ta    Dehumidifying  Tb    Cooling or cooling region in dehumidifying operation, indoor fan speed sLo (lowest)

Branch unit 3

Ta-tn

Outdoor unit 2

54

## Fig. 25 (a)

Ta: Control piping temperature

Indoor unit 4a    Indoor unit 4b    Indoor unit 4c

Dehumidifying (dry) Ta    Dehumidifying (dry) Tb    TC Dehumidifying (dry)

Branch unit 3

Ta

$Ta > Tb > Tc$

Outdoor unit 2

## Fig. 25 (b)

Indoor unit 4a    Indoor unit 4b    Indoor unit 4c

Dehumidifying (dry) Ta    Dehumidifying (dry) Tb    Thermo OFF LnO instruction in dehumidifying (dry)

Branch unit 3

Ta

Outdoor unit 2

Fig. 26

$$t_4 > t_5$$
$$t_4 \geq t_5 \times 3$$

LnO instruction by differential temperature calculating circuit

Indoor fan speed

(rpm)

$t_4$      $t_5$      $t_4$

240 sec    60 sec